# EUROPEAN PATENT SPECIFICATION

(11) **EP 4 012 539 B1**
(45) Date of publication and mention of the grant of the patent: **26.06.2024**
(21) Application number: 21214508.0
(22) Date of filing: 14.12.2021
(51) Int. Cl.: G06F 3/041

(54) **TOUCH DISPLAY DEVICE AND DRIVING METHOD OF THE SAME**
BERÜHRUNGSANZEIGEVORRICHTUNG UND ANSTEUERUNGSVERFAHREN DAFÜR
DISPOSITIF D'ÉCRAN TACTILE ET SON PROCÉDÉ DE COMMANDE

(30) Priority: 14.12.2020 KR 20200174182; 31.03.2021 KR 20210042313
(43) Date of publication of application: 15.06.2022
(73) Proprietor: LG Display Co., Ltd., SEOUL, 07336 (KR)
(72) Inventor: JUNG, Sojung, 10845 GYEONGGI-DO (KR)
(74) Representative: Ter Meer Steinmeister & Partner

(56) References cited:
- KR-A- 20200 014 591
- US-A1- 2018 150 168
- US-A1- 2020 020 296

## Description

This application claims the priority of Korean Patent Application No. 10-2020-0174182 filed on December 14, 2020 and Korean Patent Application No. 10-2021-0042313 filed on March 31, 2021, in the Korean Intellectual Property Office.

### BACKGROUND

### Field

The present disclosure relates to a touch display device, and more particularly, to a touch display device configured to output a pulse-width modulated PWM touch driving signal and a driving method of the same.

### Description of the Related Art

As the information society is developed, demands for display devices for displaying images are increased in various forms. Recently, various display devices such as a liquid crystal display device LCD, a plasma display panel PDP, and an organic light emitting display device OLED are utilized.

Among such display devices, there is a touch display device which provides a touch-based input method to allow a user to easily, intuitively and conveniently input information or commands by departing from usual input methods, such as buttons, keyboards, or mouse.

In order to provide the touch-based input method, it is required for the touch display device to figure out whether there is a touch of a user and accurately detect a touch coordinate (a touch position).

To this end, a capacitance touch method which detects the presence of touch and a touch coordinate based on the change in capacitance between touch electrodes or capacitance between a touch electrode and a pointer such as a finger, by a plurality of touch electrodes which is disposed in a touch panel as touch sensors, is being frequently employed.

Further, the touch display device may be time-divisionally driven into a display period and a touch sensing period. During the display period, one frame is displayed and during the touch sensing period, a touch of the screen is sensed.

During the above-described touch sensing period, a pulse-width modulated PWM touch driving signal is transmitted to a touch electrode and analog touch sensing signal data is received from the touch electrode to be converted into a digital signal to determine the touch (analog to digital converting).

However, there is a problem in that when the period is switched to the display period during the analog-digital conversion, a jitter is generated in the converted digital sensing data due to a source channel toggle for display driving, so that a touch performance is degraded.
KR 2020 0014591 A discloses a touch driving apparatus including a signal generator configured to receive a vertical synchronization signal indicating a frame, receive a first touch synchronization signal indicating touch sections, and generate a second touch synchronization signal according to an internal clock based on the vertical synchronization signal; a signal modulator configured to generate a touch driving modulated signal in some or all sections of the touch sections indicated by the two touch synchronization signals; and a sensor driver configured to supply a touch driving signal synchronized with the touch driving modulation signal to a touch sensor.
US 2018/150169 A1 relates to a touch sensing circuit comprising a touch sensing processor configured to output a touch driving signal during a touch sensing period to at least two touch electrodes, and to convert a touch sensing signal detected through each touch electrode, to which the touch driving signal is applied, during an analog-to-digital conversion period, into a digital sensing value, and a communication processor configured to transmit sensing data including the digital sensing value converted during the analog-to-digital conversion period to a touch controller, wherein the communication processor starts transmission of the sensing data including converted digital sensing values of at least some of touch sensing signals before each of touch sensing signals detected from the at least two touch electrodes are converted into a digital sensing value.
US 2020/020296 A1 relates to a display device which includes a control signal generator that generates a control signal, a first demultiplexer that time-divides a data voltage from a first channel of a data driver and distributes the data voltage from the first channel to two or more data lines, in response to the control signal, a signal delay part that delays the control signal, and a second demultiplexer that time-divides a data voltage from a second channel of the data driver and distributes the data voltage from the second channel to other two or more data lines, in response to the control signal delayed by the signal delay part.

### SUMMARY

An object to be achieved by the present disclosure is to provide a touch display device which suppresses a jitter generated in digital sensing data and a driving method thereof.

Another object to be achieved by the present disclosure is to provide a touch display device which improves a touch sensing performance and a driving method thereof.

Objects of the present disclosure are not limited to the above-mentioned objects, and other objects, which are not mentioned above, can be clearly understood by those skilled in the art from the following descriptions.

The object is solved by the features of the independent claims. Preferred embodiments are given in the dependent claims.

According to an aspect of the present disclosure, a touch display device includes: a touch panel which is time-divisionally driven into a touch sensing period and a display period by a synchronization signal and includes a plurality of touch electrodes; and a touch driver which drives the touch panel, and the touch driver includes: a touch sensing circuit configured to supply a touch driving signal to each of the plurality of touch electrodes and samples an integral value of an analog touch sensing signal detected by each of the plurality of touch electrodes to output digital sensing data; a touch control circuit configured to generate a pulse width modulation PWM signal including a plurality of pulses and receives the sensing data to figure out a touch; and a sampling control circuit configured to output a sampling control signal which controls a sampling timing of the integral value of the touch sensing signal to the touch sensing circuit. Accordingly, the jitter is not generated in the sensing data so that the touch performance may be improved.

According to another aspect of the present disclosure, a driving method of a touch display device includes: a PWM generating step of generating a pulse width modulation PWM signal including a plurality of pulses; a touch driving signal output step of outputting the PWM signal to each of the plurality of touch electrodes as a touch driving signal; a touch sensing signal input step of receiving an analog touch sensing signal detected by each of the plurality of touch electrodes; a signal comparing step of determining whether the ADC active signal and the synchronization signal overlap to output an overlap signal; a sampling control step of advancing a sampling timing of an integral value of the touch sensing signal and holding the integral value; an analog to digital converting step of receiving an integral value of the analog touch sensing signal to convert the integral value into digital sensing data; and a sensing data transmitting step of transmitting the digital sensing data to determine touch information about presence of touch and a touch position based on the sensing data, and the ADC active signal is a second level only when the analog to digital converter ADC included in the touch driver operates and the synchronization signal is a first level in the touch sensing period and is a second level in the display period so that the touch performance may be improved.

Other detailed matters of the exemplary embodiments are included in the detailed description and the drawings.

The aspects as mentioned above can be further combined with or more of the following optional features.

The touch driving signal may be based on the PWM signal.

The touch sensing circuit may include a plurality of sensing units configured to integrate the touch sensing signal.

The touch sensing circuit may include a plurality of sensing units configured to sample the integral value of the touch sensing signal.

The touch sensing circuit may include an analog to digital converter ADC configured to convert the integral value of the touch sensing signal into the digital sensing data.

Each of the plurality of sensing units may include a preamplifier configured to output the touch driving signal to the plurality of touch electrodes.

Each of the plurality of sensing units may include an integrator configured to integrate the touch sensing signal.

Each of the plurality of sensing units may include a sample and hold circuit configured to samples and holds the integral value of the touch sensing signal.

The plurality of frames may include a first frame and a second frame following the first frame.

Only when an operation period of the analog to digital converter ADC and the display period overlap in the first frame, the sampling control circuit may output the sampling control signal which advances the sampling timing of the integral value of the touch sensing signal to the sample and hold circuit in the second frame.

The analog to digital converter ADC may output a second level of ADC active signal to the sampling control circuit only while the integral value of the touch sensing signal is converted into the digital sensing data and the synchronization signal is a first level in the touch sensing period and is a second level in the display period.

The sampling control circuit may include a comparator configured to determine whether the ADC active signal and the synchronization signal overlap to output an overlap signal.

The sampling control circuit may include a sampling control signal generator configured to generate the sampling control signal in accordance with the overlap signal.

When both the ADC active signal and the synchronization signal are second levels, the comparator may generate a second level of overlap signal.

When any one of the ADC active signal and the synchronization signal is a first level, the comparator may generate a first level of overlap signal.

The sampling control signal generator may generate the sampling control signal only when the overlap signal is a second level.

The sampling control circuit may include a register configured to store an overlap signal for every touch sensing period in which different types of touches may be performed.

The touch sensing circuit may further include a data compensator configured to compensate for the digital sensing data output from the analog to digital converter to generate digital compensated sensing data.

The data compensator may add digital sensing data input from the analog to digital converter ADC to sensing data corresponding to a touch sensing signal which is not sampled to generate the compensated sensing data.

In the signal comparing step, when both the ADC active signal and the synchronization signal are second levels, a second level of overlap signal may be generated and when any one of the ADC active signal and the synchronization signal is a first level, a first level of overlap signal may be generated.

When the overlap signal is a second level, in the sampling control step, an integral value of the touch sensing signal may be sampled before outputting a last pulse of the plurality of pulses of the PWM signal.

The driving method of the touch display device may further comprise a sensing data compensating step of adding the digital sensing data converted in the analog to digital converting step to sensing data corresponding to a touch sensing signal which is not sampled in the sampling control step to generate compensated sensing data.

In the sensing data transmitting step, the digital compensated sensing data may be transmitted to determine touch information about presence of touch and a touch position based on the compensated sensing data.

According to the present disclosure, an operation of an analog-to-digital converter is completed within the touch sensing period so that jigger is not generated in converted digital sensing data, thereby improving a touch performance.

According to the present disclosure, digital sensing data is compensated by adding sensing data corresponding to a removed pulse of a PWM signal to sensing data, to more accurately acquire sensing data.

The effects according to the present disclosure are not limited to the contents exemplified above, and more various effects are included in the present specification.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a block diagram illustrating a touch display device according to an exemplary embodiment of the present disclosure;
FIG. 2 is a view for explaining a touch panel according to an exemplary embodiment of the present disclosure;
FIG. 3A is a view for explaining vertical blank type time-divisional driving of a touch display device according to an exemplary embodiment of the present disclosure;
FIG. 3B is a view for explaining horizontal blank type time-divisional driving of a touch display device according to an exemplary embodiment of the present disclosure;
FIG. 3C is a view for explaining a touch type performed in horizontal blank type time-divisional driving of a touch display device according to an exemplary embodiment of the present disclosure.
FIG. 4 is a view for explaining a touch driver of a touch display device according to an exemplary embodiment of the present disclosure;
FIG. 5 is a view for explaining a sensing unit of a touch display device according to an exemplary embodiment of the present disclosure;
FIG. 6 is a view for explaining a PWM modulator of a touch display device according to an exemplary embodiment of the present disclosure;
FIGS. 7A to 7D are views for explaining an operation of a PWM modulator of a touch display device according to an exemplary embodiment of the present disclosure;
FIG. 8 is a view for explaining a touch driver of a touch display device according to another exemplary embodiment (a second exemplary embodiment) of the present disclosure;
FIG. 9 is a view for explaining an operation of a data compensator of a touch display device of another exemplary embodiment (a second exemplary embodiment) of the present disclosure;
FIG. 10 is a flowchart for explaining a driving method of a touch display device according to an exemplary embodiment of the present disclosure;
FIG. 11 is a flowchart for explaining a driving method of a touch display device according to another exemplary embodiment (a second exemplary embodiment) of the present disclosure;
FIG. 12 is a view for explaining a touch driver of a touch display device according to still another exemplary embodiment (a third exemplary embodiment) of the present disclosure;
FIG. 13 is a view for explaining a sensing unit of a touch display device according to still another exemplary embodiment (a third exemplary embodiment) of the present disclosure;
FIG. 14 is a view for explaining a sampling control circuit of a touch display device according to still another exemplary embodiment (a third exemplary embodiment) of the present disclosure;
FIGS. 15A to 15D are views for explaining an operation of a PWM modulator of a touch display device according to still another exemplary embodiment (a third exemplary embodiment) of the present disclosure;
FIG. 16 is a view for explaining a touch driver of a touch display device according to still another exemplary embodiment (a fourth exemplary embodiment) of the present disclosure;
FIG. 17 is a view for explaining an operation of a data compensator of a touch display device of another exemplary embodiment (a fourth exemplary embodiment) of the present disclosure;
FIG. 18 is a flowchart for explaining a driving method of a touch display device according to another exemplary embodiment (a third exemplary embodiment) of the present disclosure;
FIG. 19 is a flowchart for explaining a driving method of a touch display device according to another exemplary embodiment (a fourth exemplary embodiment) of the present disclosure;
FIG. 20 is a view for explaining a PWM modulator of a touch display device according to still another exemplary embodiment (a fifth exemplary embodiment) of the present disclosure; and
FIG. 21 is a view for explaining a sampling control circuit of a touch display device according to still another exemplary embodiment (a sixth exemplary embodiment) of the present disclosure.

### DETAILED DESCRIPTION OF THE EMBODIMENT

Advantages and characteristics of the present disclosure and a method of achieving the advantages and characteristics will be clear by referring to exemplary embodiments described below in detail together with the accompanying drawings. However, the present disclosure is not limited to the exemplary embodiments disclosed herein but will be implemented in various forms. The exemplary embodiments are provided by way of example only so that those skilled in the art can fully understand the disclosures of the present disclosure and the scope of the present disclosure. Therefore, the present disclosure will be defined only by the scope of the appended claims.

The shapes, sizes, ratios, angles, numbers, and the like illustrated in the accompanying drawings for describing the exemplary embodiments of the present disclosure are merely examples, and the present disclosure is not limited thereto. Like reference numerals generally denote like elements throughout the specification. Further, in the following description of the present disclosure, a detailed explanation of known related technologies may be omitted to avoid unnecessarily obscuring the subject matter of the present disclosure. The terms such as "including," "having," and "consist of" used herein are generally intended to allow other components to be added unless the terms are used with the term "only". Any references to singular may include plural unless expressly stated otherwise.

Components are interpreted to include an ordinary error range even if not expressly stated.

When the position relation between two parts is described using the terms such as "on", "above", "below", and "next", one or more parts may be positioned between the two parts unless the terms are used with the term "immediately" or "directly".

When an element or layer is disposed "on" another element or layer, another layer or another element may be interposed directly on the other element or therebetween.

Although the terms "first", "second", and the like are used for describing various components, these components are not confined by these terms. These terms are merely used for distinguishing one component from the other components. Therefore, a first component to be mentioned below may be a second component in a technical concept of the present disclosure.

Like reference numerals generally denote like elements throughout the specification.

A size and a thickness of each component illustrated in the drawing are illustrated for convenience of description, and the present disclosure is not limited to the size and the thickness of the component illustrated.

The features of various embodiments of the present disclosure can be partially or entirely adhered to or combined with each other and can be interlocked and operated in technically various ways, and the embodiments can be carried out independently of or in association with each other.

A low level of a signal may be defined as a first level and a high level of a signal may be defined as a second level.

Hereinafter, a display device according to exemplary embodiments of the present disclosure will be described in detail with reference to accompanying drawings.

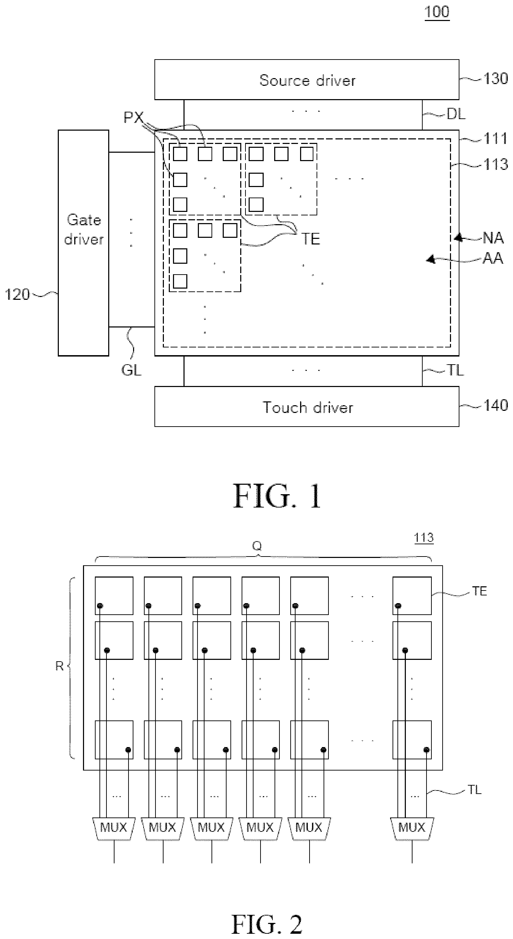

FIG. 1 is a block diagram illustrating a touch display device according to an exemplary embodiment of the present disclosure.

Referring to FIG. 1, a touch display device 100 includes a display panel 111, a touch panel 113, a gate driver 120, a source driver 130, and a touch driver 140.

The display panel 111 includes a substrate using glass or plastic and a plurality of gate lines GL and a plurality of data lines DL disposed on the substrate to intersect each other. A plurality of pixels PX is defined at the intersections of the plurality of gate lines GL and the plurality of data lines DL. An area in which a plurality of pixels implementing images is disposed is referred to as a display area AA and an area which is disposed at the outside of the display area AA and the plurality of pixels PX is not disposed is referred to as a non-display area NA.

Each of the plurality of pixels PX of the display panel 111 includes at least one thin film transi stor.

Further, when the touch display device 100 according to the exemplary embodiment of the present disclosure is an electroluminescent display device, a current is applied to an electroluminescent diode equipped in the plurality of pixels PX and discharged electrons and holes are coupled to generate excitons. The excitons emit light to implement a gray scale of the electroluminescent display device.

However, the touch display device 100 according to the exemplary embodiment of the present disclosure is not limited to the electroluminescent display device, but may be various types of the display device such as a liquid crystal display device.

The touch panel 113 senses a touch input of a user. Specifically, the touch panel 113 includes a plurality of touch electrodes TE and each touch electrode TE senses the touch of the user. Here, the touch electrode TE may be formed to have a size corresponding to a size of the plurality of pixels PX.

The touch panel 113 may be manufactured separately from the display panel 111 to be attached onto the display panel 111 as an add-on type or may be embedded in the display panel 111.

Specifically, when the touch panel 113 is embedded in the display panel 111, the plurality of touch electrodes TE may be disposed as an in-cell type or an on-cell type and in this case, the touch electrode TE may be formed during the manufacturing process of the display panel 111.

For example, the plurality of touch electrodes TE disposed on the touch panel 113 may be common electrodes corresponding to the plurality of pixels PX. To be more specific, cathodes of the plurality of electroluminescent diodes disposed in the plurality of pixels PX may correspond to the touch electrodes TE.

The gate driver 120 sequentially supplies a gate voltage of an on-voltage or an off-voltage to gate lines GL in accordance with a gate control signal GCS output from a timing controller.

The gate control signal includes a gate start pulse, a gate shift clock, a gate output enable signal, and the like.

The above-described gate start pulse controls an operation start timing of one or more gate circuits which configure the gate driver 120. The gate shift clock is a clock signal which is commonly input to one or more gate circuits and controls a shift timing of the scan signal (gate pulse). The gate output enable signal designates timing information of one or more gate circuits.

According to a driving method, the gate driver 120 may be located only at one side of the display panel 111 or located at both sides as necessary.

The gate driver 120 may include a shift register, a level shifter, and the like.

The source driver 130 converts digital image data applied from an external system into an analog data voltage Vdata based on the data control signal to output the converted analog data voltage to the data line DL.

The above-described data control signal includes a source start pulse, a source sampling clock, a source output enable signal, and the like.

The above-described source start pulse controls a data sampling start timing of one or more data circuits which configure the source driver 130. The source sampling clock is a clock signal which controls a sampling timing of data in each data circuit. The source output enable signal controls an output timing of the source driver 130.

The source driver 130 is connected to a bonding pad of the display panel 111 by a tape automated bonding method or a chip on glass method or may be directly disposed on the display panel 111. If necessary, the source driver 120 may be disposed to be integrated in the display panel 111.

The source driver 130 may include a logic unit including various circuits such as a level shifter or a latch unit, a digital analog converter DAC, an output buffer, and the like.

The touch driver 140 is electrically connected to the touch electrode TE through the touch line TL to determine whether there is a touch of the user and a touch position. That is, when the user touches a part of the touch panel 113, the touch driver 140 senses a touch signal of the touch electrode TE to determine whether the user touches the touch panel 113 and a touch position.

Specifically, the touch driver 140 may supply the touch driving signal to each touch electrode TE. The touch driver 140 may be applied with a touch sensing signal from each touch electrode TE. The touch driver 140 may sense the touch in the touch panel 113 by the touch sensing signal described above.

The touch driver 140 may be combined with the source driver 130 to configure one combined driver. Therefore, one combined driver not only converts digital image data applied from the external system into analog data voltage Vdata, based on the data control signal, to output the converted analog data voltage to the data line DL, but also is connected to the touch electrode TE through the touch line TL to determine whether there is the touch of the user and the touch position.

In the meantime, a method of sensing the touch using each touch electrode TE may be classified into a mutual capacitance type which senses the change in mutual capacitance of the touch electrode TE and a self-capacitance type which senses the change in self-capacitance of the touch electrode TE.

Hereinafter, it will be described that the touch display device 100 according to the exemplary embodiment of the present disclosure senses the touch by a self-capacitance type.

However, the touch driving type of the touch display device 100 according to the exemplary embodiment of the present disclosure is not limited to the self-capacitance type, but if necessary, a mutual capacitance type which senses the change in the mutual capacitance of the touch electrode TE may also be applied.

FIG. 2 is a view for explaining a touch panel according to an exemplary embodiment of the present disclosure.

As illustrated in FIG. 2, the touch panel 113 includes a plurality of touch electrodes TE disposed in a matrix. For example, in FIG. 2, a plurality of touch electrodes TE disposed in a Q × R matrix is illustrated. Here, Q and R are natural numbers of 1 or larger, respectively.

The plurality of touch electrodes TE may be electrically connected to a plurality of multiplexers MUX included in the touch driver, by means of the plurality of touch lines TL. Specifically, each of the plurality of touch electrodes TE may be electrically connected to the MUX by means of at least one touch line TL.

That is, in FIG. 2, even though it is illustrated that each of the plurality of touch electrodes TE is connected to one touch line TL, the present disclosure is not limited thereto and each of the plurality of touch electrodes TE may be connected to the plurality of touch lines TL.

To be more specific, the plurality of touch electrodes TE disposed in one column may be connected to one MUX. For example, as illustrated in FIG. 2, the touch panel 113 includes Q columns of touch electrodes TE so that each of Q columns of touch electrodes TE may be connected to each of Q MUXs.

For example, as illustrated in FIG. 2, R touch electrodes TE disposed in one column are connected to a corresponding MUX or Q touch electrodes TE disposed in one row may be connected to a corresponding MUX. However, the present disclosure is not limited thereto. R/2 touch electrodes TE disposed in an upper portion, among R touch electrodes TE disposed in one column, may be connected to any one MUX. Further, R/2 touch electrodes TE disposed in a lower portion, among R touch electrodes TE disposed in one column, may be connected to the other MUX. Alternatively, Q/2 touch electrodes TE disposed at a left side, among Q touch electrodes TE disposed in one row, may be connected to any one MUX. Further, Q/2 touch electrodes TE disposed at a right side, among Q touch electrodes TE disposed in one row, may be connected to the other MUX.

In the meantime, the touch electrode TE may be formed by patterning a conductive metal layer. For example, the touch electrode TE may be formed of a transparent material such as indium tin oxide ITO. Accordingly, light emitted from the display device 100 may pass through the touch electrode TE formed of an ITO electrode to be emitted to the outside. However, the present disclosure is not limited thereto and the touch electrode TE may include an electrode pattern formed with a mesh pattern or may be formed of an opaque metal material having a good conductivity corresponding to a cathode of the electroluminescent diode.

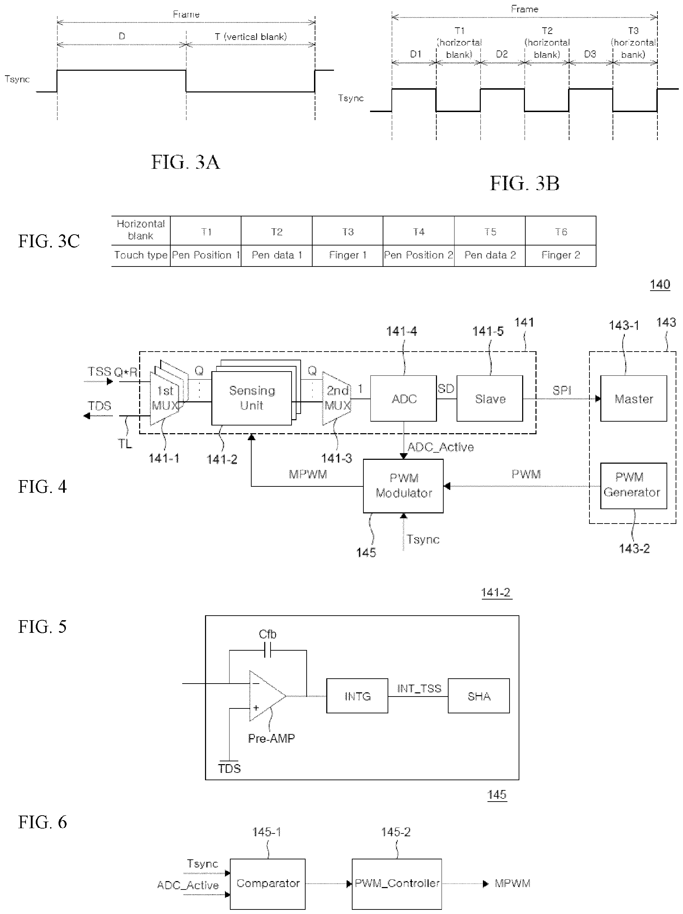

FIG. 3A is a view for explaining vertical blank type time-divisional driving of a touch display device according to an exemplary embodiment of the present disclosure.

FIG. 3B is a view for explaining horizontal blank type time-divisional driving of a touch display device according to an exemplary embodiment of the present disclosure.

FIG. 3C is a view for explaining a touch type performed in horizontal blank type time-divisional driving of a touch display device according to an exemplary embodiment of the present disclosure.

The touch display device 100 has two operation modes including a display mode and a touch sensing mode in each of a plurality of frames. A display period D corresponding to the display mode and a touch sensing period T corresponding to the touch sensing mode may be divided by times. Specifically, when a synchronization signal Tsync is a low level, it may be a touch sensing period T and when the synchronization signal Tsync is a high level, it may be a display period D. However, the present disclosure is not limited thereto so that when the synchronization signal Tsync is a high level, it may be a touch sensing period T and when the synchronization signal Tsync is a low level, it may be a display period D.

The above-described synchronization signal Tsync is generated in the timing controller to be output to the source driver 130 and the touch driver 140. Therefore, in accordance with the level of the synchronization signal Tsync, the source driver 130 and the touch driver 140 may drive the touch display device 100 in the display mode or the touch sensing mode.

For example, as illustrated in FIG. 3A, when the touch display device 100 operates in a vertical blank driving manner, one frame period may include one display period D and one touch sensing period T. Further, during one display period D, images corresponding to one frame are displayed and during one touch sensing period T, the touch driving signal is output to the touch electrode TE so that the touch in the entire area or a partial area of the touch panel 113 may be sensed. The touch driving signal may be a pulse width modulation PWM signal including a plurality of pulses.

As illustrated in FIG. 3B, when the touch display device 100 operates in a horizontal blank driving manner, one frame period is time-divided into a plurality of display periods D1, D2, and D3 and a plurality of touch sensing periods T1, T2, and T3. Therefore, one frame may be displayed during the plurality of display periods D1, D2, and D3 and the touch in the entire area or a partial area of the touch panel 113 may be sensed during the plurality of touch sensing periods T1, T2, and T3. The number of display periods and touch sensing periods may be greater than 3.

To be more specific, different types of touch sensing may be performed during each of the plurality of touch sensing periods T1, T2, T3, T4, T5, and T6.

Specifically, as illustrated in FIG. 3C, during a first touch sensing period T1, a pen position 1 of a first pen may be sensed, during a second touch sensing period T2, pen data 1 of the first pen may be sensed, and during a third touch sensing period T3, a position Finger 1 of a finger in a first area may be sensed. Further, during a fourth touch sensing period T4, a pen position 2 of a second pen may be sensed, during a fifth touch sensing period T5, pen data 2 of the second pen may be sensed, and during a sixth touch sensing period T6, a position Finger 2 of a finger in a second area may be sensed. For reference, pen data collectively refers to a touch force of the pen, a thickness of the pen, a strength of the pen, and the like.

That is, when the pen position and the pen data are sensed in each of the plurality of touch sensing periods T1, T2, T4, and T5, positions and data for a plurality of pens are sensed in the entire area. In contrast, when the position Finger of the finger is sensed in each of the plurality of touch sensing periods T3 and T6, a position of the finger is sensed only in a partial area of the display area AA.

With regard to this, a frequency of a touch driving signal required for pen position sensing, a frequency of a touch driving signal required for pen data sensing, and a frequency required for finger position sensing may be different from each other. Therefore, frequencies of touch driving signals output in the first touch sensing period T1 and the fourth touch sensing period T4, frequencies of touch driving signals output in the second touch sensing period T2 and the fifth touch sensing period T5, and frequencies of touch driving signals output in the third touch sensing period T3 and the sixth touch sensing period T6 are different from each other.

In the meantime, even though in FIG. 3C, it is illustrated that the pen position sensing, the pen data sensing, and the finger position sensing are sequentially and repeatedly performed in every period of the plurality of touch sensing periods T1, T2, T3, T4, T5, and T6, the present disclosure is not limited thereto.

That is, depending on the design of the touch display device, during the plurality of touch sensing periods, at least one pen position sensing, at least one pen data sensing, and at least one finger position sensing may be randomly performed.

FIG. 4 is a view for explaining a touch driver of a touch display device according to an exemplary embodiment of the present disclosure.

FIG. 5 is a view for explaining a sensing unit of a touch display device according to an exemplary embodiment of the present disclosure.

In the touch display device according to the exemplary embodiment of the present disclosure, the touch driver 140 may include a touch sensing circuit 141, a touch control circuit 143, and a PWM modulator 145. The above-described touch sensing circuit 141 may be disposed in the form of an integrated circuit IC and the touch control circuit 143 may be disposed in the form of a micro control unit MCU.

The touch sensing circuit 141 detects a touch sensing signal TSS which varies depending on whether there is a touch, by driving the touch panel 113.

Specifically, the touch sensing circuit 141 outputs a touch driving signal TDS to two or more touch electrodes TE and converts an analog touch sensing signal TSS detected by each touch electrode TE applied with the touch driving signal TDS into digital sensing data SD to transmit the converted digital sensing data to the touch control circuit 143.

That is, the touch sensing circuit 141 may perform analog to digital conversion to convert the analog touch sensing signal TSS detected by each touch electrode TE applied with the touch driving signal TDS into digital sensing data SD.

Specifically, as illustrated in FIG. 4, the touch sensing circuit 141 includes a plurality of first multiplexers 141-1, a plurality of sensing units 141-2, a second multiplexer 141-3, an analog to digital converter ADC 141-4, and a slave processor 141-5.

Each of the plurality of first multiplexers 141-1 selects one touch sensing signal TSS among a plurality of touch sensing signals TSS output from one column of touch electrodes TE. Specifically, each of the plurality of first multiplexers 141-1 is a circuit which is connected to a plurality of touch lines TL connected to one column of touch electrodes TE and performs R : 1 multiplexing. For example, Q first multiplexers 141-1 may select Q touch sensing signals TSS among touch sensing signals TSS received from the plurality of touch electrodes TE disposed in the Q × R matrix.

The above-described Q first multiplexers may be Q MUXs connected to Q columns of touch electrodes TE illustrated in FIG. 2.

The plurality of sensing units 141-2 integrates a plurality of touch sensing signals TSS and samples an integral value INT_TSS of the touch sensing signal. Each of the plurality of sensing units 141-2 may output the touch driving signal TDS to the corresponding touch electrode TE of the touch panel 113.

Further, each of the plurality of sensing units 141-2 is connected to each of the plurality of first multiplexers 141-1 one to one to integrate the touch sensing signal TSS selected by the first multiplexer 141-1 or output the touch driving signal TDS through the first multiplexer 141-1.

For example, Q sensing units 141-2 may be connected to Q first multiplexers 141-1 one to one.

Referring to FIG. 5, each of the plurality of sensing units 141-2 includes a preamplifier Pre-AMP, an integrator INTG, and a sample and hold circuit SHA.

The preamplifier Pre-AMP stores a charge corresponding to a capacitance formed between the touch electrode TE and a touched object. Specifically, a charge corresponding to a capacitance formed between the touch electrode TE and a touched object is stored in a feedback capacitor Cfb of the preamplifier Pre-AMP.

The preamplifier Pre-AMP may output the input touch driving signal TDS to the touch electrode TE through the first multiplexer 141-1.

The integrator INTG outputs an integral value INT_TSS of the touch sensing signal which is an output voltage of the preamplifier Pre-AMP.

Such an integrator INTG may be configured by elements such as a comparator or a capacitor. A signal output from the integrator INTG is input to the sample and hold circuit SHA.

The sample and hold circuit SHA is a circuit configured to samples and holds the integral value INT_TSS of the touch sensing signal and holds the integral value INT_TSS of the touch sensing signal until the analog to digital converter ADC 141-4 ends previous conversion.

Referring to FIG. 4, the second multiplexer 141-3 selects one touch sensing signal TSS among a plurality of touch sensing signals TSS output from the plurality of sensing units 141-2. Specifically, the second multiplexer 141-3 is a circuit which is connected to the plurality of sensing units 141-2 and performs Q : 1 multiplexing. For example, the second multiplexer 141-3 selects one of Q sensing units 141-2 to input a voltage which is held in the sample and hold circuit SHA of the selected sensing unit 141-2 to the analog to digital converter ADC 141-4.

The analog to digital converter ADC 141-4 converts the input voltage into digital sensing data SD to output the converted digital sensing data.

The output digital sensing data SD is transmitted to the touch control circuit 143 via the slave processor 141-5 of the touch sensing circuit 141.

In the period in which the analog to digital converter ADC 141-4 converts the integral value INT_TSS of the touch sensing signal into digital sensing data SD, the analog to digital converter ADC 141-4 may output an ADC active signal ADC_Active to the PWM modulator 145. That is, during the period in which the analog to digital converter ADC 141-4 outputs the integral value INT_TSS of the touch sensing signal as digital sensing data SD, the ADC active signal ADC_Active may be a high level.

In other words, only during the period in which the ADC active signal ADC_Active is a high level, the integral value INT_TSS of the analog touch sensing signal is applied to the analog to digital converter 141-4 and is converted into the digital sensing data SD.

In summary, during the touch driving processing, the analog to digital conversion processing, and the sensing data SD transmission processing, the touch sensing circuit 141 performs analog to digital conversion processing after performing touch driving processing. Further, the touch sensing circuit 141 sequentially (serially) performs the sensing data SD transmission processing after completing all the analog to digital conversion processing.

The touch control circuit 143 generates a PWM signal PWM including a plurality of pulses and receives the digital sensing data SD to determine touch information about the presence of touch and a touch position based thereon.

The touch control circuit 143 may include a master processor 143-1, a PWM generator 143-2, and the like.

The slave processor 141-5 of the touch sensing circuit 141 and the master processor 143-1 of the touch control circuit 143 form a master-slave architecture, and transmit and receive data therebetween via a communication interface I/F.

The communication interface I/F between the touch sensing circuit 141 and the touch control circuit 143 may be a serial peripheral interface SPI.

The serial peripheral interface SPI is an interface which operates in a full duplex mode which is a communication scheme that the touch sensing circuit 141 and the touch control circuit 143 simultaneously use independent lines to transmit and receive data and is a synchronous serial data connection scheme.

The PWM generator 143-2 provides the PWM signal including a plurality of pulses to the PWM modulator 145.

Specifically, the PWM generator 143-2 may supply the PWM signal PWM including a plurality of pulses to the PWM modulator 145 during the touch sensing period.

FIG. 6 is a view for explaining a PWM modulator of a touch display device according to an exemplary embodiment of the present disclosure.

The PWM modulator 145 adjusts the number of pulses of the PWM signal PWM depending on whether the ADC active signal ADC_Active and the synchronization signal Tsync overlap. That is, PWM modulator 145 removes at least one pulse among the plurality of pulses of the PWM signal PWM only when an operation period of the analog to digital converter ADC and a display period D overlap.

The PWM modulator 145 outputs the modulated PWM signal MPWM to the plurality of sensing units 141-2.

Specifically, as illustrated in FIG. 6, the PWM modulator 145 includes a comparator 145-1 which compares the ADC active signal ADC_Active and the synchronization signal Tsync to determine whether the signals overlap and a PWM controller 145-2 which adjusts the number of pulses of the PWM signal PWM.

The comparator 145-1 is applied with the ADC active signal ADC_Active and the synchronization signal Tsync and when both the ADC active signal ADC_Active and the synchronization signal Tsync are high levels, generates a high level overlap signal OS. When any one of the ADC active signal ADC_Active and the synchronization signal Tsync is a low level, the comparator 145-1 generates a low level overlap signal OS.

The above-described operation of the comparator 145-1 is based on the assumption that when the synchronization signal Tsync is a low level, it is a touch sensing period T and when the synchronization signal Tsync is a high level, it is a display period D.

However, the present disclosure is not limited thereto and in case that when the synchronization signal Tsync is a high level, it is a touch sensing period T and when the synchronization signal Tsync is a low level, it is a display period D, the operation of the comparator 145-1 is as follows.

When the ADC active signal ADC_Active is a high level and the synchronization signal Tsync is a low level, the comparator 145-1 generates a high level overlap signal OS. In contrast, when both the ADC active signal ADC_Active and the synchronization signal Tsync are low levels, the comparator 145-1 generates a low level overlap signal OS.

When the overlap signal OS is a high level, the PWM controller 145-2 removes at least one of the plurality of pulses of the PWM signal PWM. Specifically, when the overlap signal OS is a high level, the PWM controller 145-2 may sequentially remove a last pulse among the plurality of pulses of the PWM signal PWM.

Even though in FIG. 4, it is illustrated that the PWM modulator 145 is disposed separately from the touch sensing circuit 141 and the touch control circuit 143, the present disclosure is not limited thereto. That is, the PWM modulator 145 may be included in an integrated circuit IC type touch sensing circuit 141 or a micro control unit MCU type touch control circuit 143.

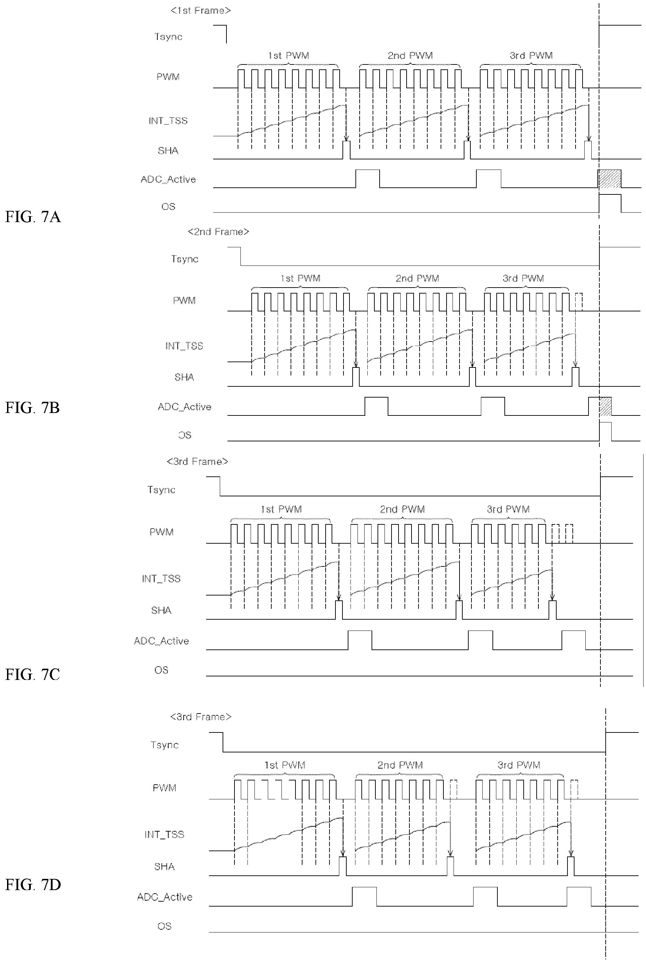

Hereinafter, the operation of the PWM modulator of the touch display device according to the exemplary embodiment of the present disclosure will be described with reference to FIGS. 7A to 7D.

FIGS. 7A to 7D are views for explaining an operation of a PWM modulator of a touch display device according to an exemplary embodiment of the present disclosure.

Specifically, FIG. 7A illustrates various signals for touch sensing in a touch sensing period of a first frame period 1^{st} Frame, FIG. 7B illustrates various signals for touch sensing in a touch sensing period of a second frame period 2^{nd} Frame, and FIGS. 7C and 7D illustrate various signals for touch sensing in a touch sensing period of a third frame period 3^{rd} Frame.

Referring to FIG. 7A, during the touch sensing period of the first frame period 1^{st} Frame, the plurality of PWM signals PWM is transmitted to the touch sensing circuit 141.

For example, three PWM signals PWM are illustrated. A first PWM signal 1^{st} PWM is output to the touch electrode TE via a first sensing unit 141-2 and a first first multiplexer 141-1, as a touch driving signal TDS. A second PWM signal 2^{nd} PWM is output to the touch electrode TE via a second sensing unit 141-2 and a second first multiplexer 141-1, as a touch driving signal TDS. A third PWM signal 3^{rd} PWM is output to the touch electrode TE via a third sensing unit 141-2 and a third first multiplexer 141-1, as a touch driving signal TDS.

In the first frame period 1^{st} Frame, the synchronization signal Tsync falls from a high level to a low level so that the touch display device 100 is changed from the display mode to the touch sensing mode.

In the above-description, the operation is based on the assumption that when the synchronization signal Tsync is a low level, it is a touch sensing period T and when the synchronization signal Tsync is a high level, it is a display period D.

However, the present disclosure is not limited thereto and in case that when the synchronization signal Tsync is a high level, it is a touch sensing period T and when the synchronization signal Tsync is a low level, it is a display period D, the synchronization signal Tsync rises from a low level to a high level. Therefore, the touch display device 100 is changed from the display mode to the touch sensing mode.

Next, the touch driving signal TDS is generated using the first PWM signal 1^{st} PWM and the touch driving signal TDS is output to a first touch electrode TE column. After a falling time of the last pulse of the first PWM signal 1^{st} PWM, the sample and hold circuit SHA of the first sensing unit 141-2 is driven to sample and hold the integral value INT_TSS of the touch sensing signal. The analog to digital converter ADC 141-4 receives the integral value INT_TSS of the analog touch sensing signal to convert the integral value into the digital sensing data SD.

At this time, the analog to digital converter ADC 141-4 may output a high level ADC active signal ADC_Active.

In summary, as described above, the ADC active signal ADC_Active is a square wave signal which is a high level only while the analog to digital converter 141-4 converts the integral value INT_TSS of the touch sensing signal into the sensing data SD, and is a low level in the other period. That is, the ADC active signal ADC_Active is a square wave indicating whether the analog to digital converter 141-4 operates. In contrast, the digital sensing data SD which is converted by the analog to digital converter 141-4 is obtained by converting the integral value INT_TSS of the analog touch sensing signal into a digital form so that it is not a simple square form, but it means a predetermined digital value.

Further, while the ADC active signal ADC_Active is a high level, the touch driving signal TDS is generated using the second PWM signal 2^{nd} PWM and the generated touch driving signal TDS is output to a second touch electrode TE column. After a falling time of the last pulse of the second PWM signal 2^{nd} PWM, the sample and hold circuit SHA of the second sensing unit 141-2 is driven to sample and hold the integral value INT_TSS of the touch sensing signal. While the ADC active signal ADC _Active is a high level, the analog to digital converter ADC 141-4 receives the integral value INT_TSS of the analog touch sensing signal to convert the integral value into the digital sensing data SD.

Further, while the ADC active signal ADC _Active is a high level, the touch driving signal TDS is generated using the third PWM signal 3^{rd} PWM and the generated touch driving signal TDS is output to a third touch electrode TE column. After a falling time of the last pulse of the third PWM signal 3^{rd} PWM, the sample and hold circuit SHA of the third sensing unit 141-2 is driven to sample and hold the integral value INT_TSS of the touch sensing signal. While the ADC active signal ADC _Active is a high level, the analog to digital converter ADC 141-4 receives the integral value INT _TSS of the analog touch sensing signal to convert the integral value into the digital sensing data SD.

However, after outputting the third PWM signal 3^{rd} PWM, while the ADC active signal ADC _Active is a high level, the synchronization signal Tsync rises to a high level. Therefore, during the period in which both the ADC active signal ADC _Active and the synchronization signal Tsync are high levels, the comparator 145-1 generates a high level overlap signal OS. The PWM controller 145-2 applied with the high level overlap signal OS removes the last pulse of the third PWM signal 3^{rd} PWM of a subsequent frame.

Therefore, as illustrated in FIG. 7B, during the second frame period 2^{nd} Frame, the first PWM signal 1^{st} PWM and the second PWM signal 2^{nd} PWM are output with eight pulses similarly to the first frame period 1^{st} Frame. However, in a 3^{rd} PWM, the number of pulses may be reduced from eight pulses to seven pulses. The PWM signal PWM which includes eight pulses is merely an example and the number of pulses of the PWM signals may be plural (N, N is a natural number of 1 or larger). In this case, the number of the pulses of the 3^{rd} PWM may be reduced to be smaller than N and for example, the number of pulses of the 3^{rd} PWM may be N-1.

Further, during the second frame period 2^{nd} Frame, the touch driving signal TDS is generated using the third PWM signal 3^{rd} PWM and the generated touch driving signal TDS is output to a third touch electrode TE column. After a falling time of the last pulse of the third PWM signal 3^{rd} PWM, the sample and hold circuit SHA of the third sensing unit 141-2 is driven to sample and hold the integral value INT_TSS of the touch sensing signal. While the ADC active signal ADC_Active is a high level, the analog to digital converter ADC 141-4 receives the integral value INT_TSS of the analog touch sensing signal to convert the integral value into the digital sensing data SD.

However, after outputting the third PWM signal 3^{rd} PWM, while the ADC active signal ADC _Active is a high level, the synchronization signal Tsync rises to a high level. Therefore, while both the ADC active signal ADC _Active and the synchronization signal Tsync are high levels, the comparator 145-1 generates a high level overlap signal OS. The PWM controller 145-2 which is applied with the high level overlap signal OS may remove a last pulse of the third PWM signal 3^{rd} PWM of a subsequent frame (illustrated in FIG. 7C) or remove a last pulse of the second PWM signal 2^{nd} PWM (illustrated in FIG. 7D).

That is, the number of pulses of the third PWM signal 3^{rd} PWM of the subsequent frame may be N-2 (as illustrated in FIG. 7C) or the number of pulses of the second PWM signal 2^{nd} PWM may be N-1 (as illustrated in FIG. 7D).

Accordingly, as illustrated in FIG. 7C, during the third frame period 3^{rd} Frame, the first PWM signal 1^{st} PWM and the second PWM signal 2^{nd} PWM are output with eight pulses similarly to the first frame period 1^{st} Frame and the second frame period 2^{nd} Frame. In the third frame period 3^{rd} Frame, the number of pulses of the third PWM signal 3^{rd} PWM may be reduced from seven to six.

Alternatively, as illustrated in FIG. 7D, during the third frame period 3^{rd} Frame, the first PWM signal 1^{st} PWM is output with eight pulses similarly to the first frame period 1^{st} Frame and the second frame period 2^{nd} Frame. The third PWM signal 3^{rd} PWM is output with seven pulses, similarly to the second frame period 2^{nd} Frame. In the third frame period 3^{rd} Frame, the number of pulses of the second PWM signal 2^{nd} PWM may be reduced from eight to seven.

Further, in the third frame period 3^{rd} Frame, the touch driving signal TDS is generated using the third PWM signal 3^{rd} PWM and the generated touch driving signal TDS is output to a third touch electrode TE column. After a falling time of the last pulse of the third PWM signal 3^{rd} PWM, the sample and hold circuit SHA of the third sensing unit 141-2 is driven to sample and hold the integral value INT_TSS of the touch sensing signal. While the ADC active signal ADC_Active is a high level, the analog to digital converter ADC 141-4 receives the integral value INT_TSS of the analog touch sensing signal to convert the integral value into the digital sensing data SD.

However, after outputting the third PWM signal 3^{rd} PWM, the ADC active signal ADC _Active falls to a low level, the synchronization signal Tsync rises to a high level. Therefore, there is no period in which both the ADC active signal ADC _Active and the synchronization signal Tsync are high levels in the third frame period, so that the comparator 145-1 generates a low level overlap signal OS. At this time, the PWM controller 145-2 is applied with a low level overlap signal OS, so that the pulse of the PWM signal PWM of the subsequent frame is not removed anymore.

As described above, the PWM modulator 145 of the touch display device according to the exemplary embodiment of the present disclosure may sequentially advance the period in which the analog to digital converter operates by adjusting the number of pulses of the PWM signal. By doing this, the operation of the analog to digital converter may be completed within the touch sensing period of the touch display device according to the exemplary embodiment of the present disclosure. As a result, in the touch display device according to the exemplary embodiment of the present disclosure, jitter is not generated in the digitally converted sensing data due to the source channel toggle for the display driving so that the touch performance may be improved.

Hereinafter, a touch display device according to another exemplary embodiment (a second exemplary embodiment) of the present disclosure will be described. A touch display device according to another exemplary embodiment (a second exemplary embodiment) of the present disclosure is the same as the touch display device according to the exemplary embodiment of the present disclosure except that a compensator configured to compensate for sensing data is added. Hereinafter, a compensator of a touch display device according to another exemplary embodiment (a second exemplary embodiment) of the present disclosure will be described in detail.

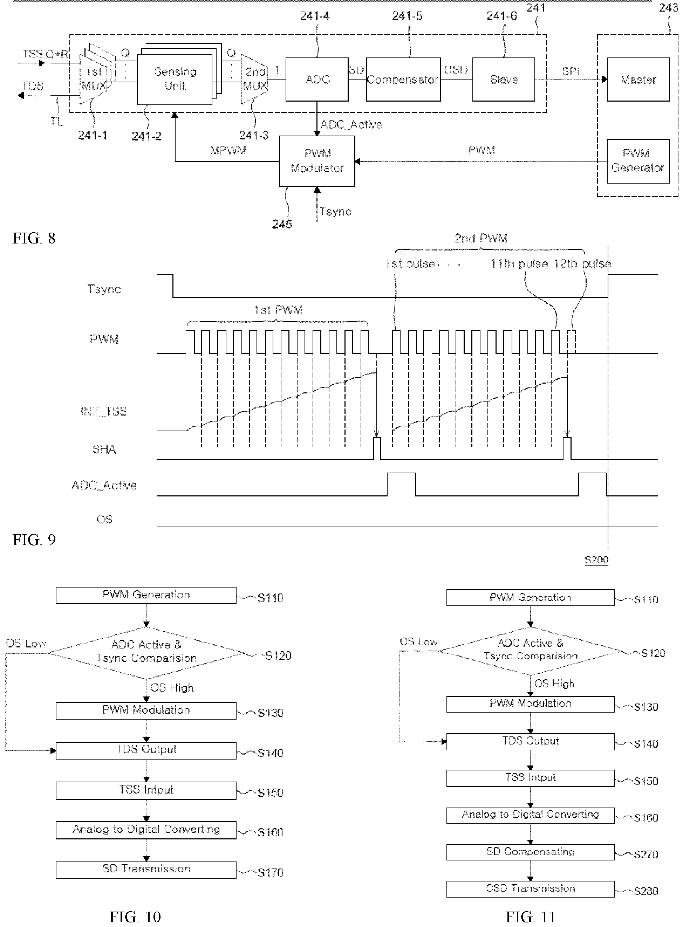

FIG. 8 is a view for explaining a touch driver of a touch display device according to another exemplary embodiment (a second exemplary embodiment) of the present disclosure.

In the touch display device according to another exemplary embodiment (a second exemplary embodiment) of the present disclosure, a touch driver 240 may include a touch sensing circuit 241, a touch control circuit 243, and a PWM modulator 245.

The touch control circuit 243 and the PWM modulator 245 are the same as the touch control circuit 143 and the PWM modulator 145 of the touch display device according to the exemplary embodiment of the present disclosure, so that a redundant description will be omitted.

The touch sensing circuit 241 detects a touch sensing signal TSS which varies depending on whether there is a touch, by driving the touch panel 113.

Specifically, the touch sensing circuit 241 outputs a touch driving signal TDS to two or more touch electrodes TE and converts an analog touch sensing signal TSS detected by the touch electrode TE applied with the touch driving signal TDS into digital sensing data SD to transmit the converted digital sensing data to the touch control circuit 243.

That is, the touch sensing circuit 241 may perform analog to digital conversion to convert the analog touch sensing signal TSS detected by each touch electrode TE applied with the touch driving signal TDS into digital sensing data SD.

The touch sensing circuit 241 in the touch display device according to another exemplary embodiment (a second exemplary embodiment) of the present disclosure may compensate for sensing data corresponding to a pulse removed from the modulated PWM signal MPWM in the PWM modulator 245.

Specifically, as illustrated in FIG. 8, the touch sensing circuit 241 includes a plurality of first multiplexers 241-1, a plurality of sensing units 241-2, a second multiplexer 241-3, an analog to digital converter ADC 241-4, a data compensator 241-5, and a slave processor 241-6.

Each of the plurality of first multiplexers 241-1 selects one touch sensing signal TSS among a plurality of touch sensing signals TSS output from one column of touch electrodes TE. Specifically, each of the plurality of first multiplexers 241-1 is a circuit which is connected to a plurality of touch lines TL connected to one column of touch electrodes TE and performs R : 1 multiplexing. For example, Q first multiplexers 241-1 may select Q touch sensing signals TSS among touch sensing signals TSS received from the plurality of touch electrodes TE disposed in the Q × R matrix.

The plurality of sensing units 241-2 integrates a plurality of touch sensing signals TSS and samples an integral value INT_TSS of the touch sensing signal. Each of the plurality of sensing units 241-2 may output the touch driving signal TDS to the corresponding touch electrode TE of the touch panel 113.

Further, each of the plurality of sensing units 241-2 is connected to the plurality of first multiplexers 241-1 one to one to integrate the touch sensing signal TSS selected by the first multiplexer 241-1 or output the touch driving signal TDS through the first multiplexer 241-1.

For example, Q sensing units 241-2 may be connected to Q first multiplexers 241-1 one to one.

The second multiplexer 241-3 selects one touch sensing signal TSS among a plurality of touch sensing signals TSS output from the plurality of sensing units 241-2. Specifically, the second multiplexer 241-3 is a circuit which is connected to the plurality of sensing units 241-2 and performs Q : 1 multiplexing. For example, the second multiplexer 241-3 selects one of Q sensing units 241-2 to input a voltage which is held in the sample and hold circuit SHA of the selected sensing unit 241-2 to the analog to digital converter ADC 241-4.

The analog to digital converter ADC 241-4 converts the input voltage into digital sensing data SD to output the converted digital sensing data SD.

Further, during the period in which the analog to digital converter ADC 241-4 operates, the analog to digital converter ADC 241-4 may output a high level ADC active signal ADC_Active to the PWM modulator 245.

FIG. 9 is a view for explaining an operation of a data compensator of a touch display device according to another exemplary embodiment (a second exemplary embodiment) of the present disclosure.

The data compensator 241-5 compensates for the converted digital sensing data SD to generate digital compensated sensing data CSD.

As described above, the PWM modulator 145 removes some of the pulses of the PWM signal PWM depending on whether the ADC active signal ADC _Active and the synchronization signal Tsync overlap. That is, as illustrated in FIG. 9, a twelfth pulse which is the last pulse of the second PWM signal 2^{nd} PWM is removed.

Therefore, after calculating sensing data corresponding to the number of removed pulses, the data compensator 241-5 adds digital sensing data SD input from the analog to digital converter ADC 241-4 to generate digital compensated sensing data CSD.

For example, when it is assumed that sensing data SD by a first pulse to an eleventh pulse of the second PWM signal 2^{nd} PWM is 1100, average sensing data for one pulse of the second PWM signal 2^{nd} PWM may be set to 100. That is, the sensing data corresponding to the removed twelfth pulse may be set to 100.

Therefore, the data compensator 241-5 adds 100 which is the sensing data corresponding to the removed twelfth pulse to 1100 which is the sensing data SD by the first pulse to the eleventh pulse to generate the compensated sensing data CSD.

The output digital compensated sensing data CSD is transmitted to the touch control circuit 243 via the slave processor 241-6 of the touch sensing circuit 241.

In the touch display device according to another exemplary embodiment (a second exemplary embodiment) of the present disclosure, sensing data corresponding to the removed pulse of the PWM signal is added to the sensing data to compensate for the digital sensing data.

Therefore, in the touch display device according to another exemplary embodiment (a second exemplary embodiment) of the present disclosure, jitter is not generated in the sensing data. Further, even though the PWM signal is partially removed, the sensing data may not be damaged.

As a result, the touch display device according to another exemplary embodiment (second exemplary embodiment) of the present disclosure may more accurately perform the touch sensing.

Hereinafter, a driving method of a touch display device according to an exemplary embodiment of the present disclosure will be described. The driving method of a touch display device according to an exemplary embodiment of the present disclosure will be described based on the above-described touch display device according to the exemplary embodiment of the present disclosure.

FIG. 10 is a flowchart for explaining a driving method of a touch display device according to an exemplary embodiment of the present disclosure.

A driving method S100 of the touch display device according to the exemplary embodiment of the present disclosure includes a PWM generating step (PWM generation) S110, a signal comparing step (ADC _Active & Tsync comparison) S120, a PWM modulating step (PWM modulation) S130, a touch driving signal output step (TDS output) S140, a touch sensing signal input step (TSS input) S150, an analog to digital converting step S160, and a sensing data transmitting step (SD transmission) S170.

In the PWM generating step (PWM generation) S110, a PWM signal including a plurality of pulses is generated.

Specifically, in the PWM generating step (PWM generation) S110, a plurality of PWM signals including a plurality of pulses may be generated. For example, as illustrated in FIGS. 7A to 7D, a first PWM signal 1^{st} PWM, a second PWM signal 2^{nd} PWM, and a third PWM signal 3^{rd} PWM may be output.

In the signal comparing step (ADC _Active & Tsync Comparison) S120, the ADC active signal ADC _Active and the synchronization signal Tsync are compared to determine whether the ADC active signal ADC _Active and the synchronization signal Tsync overlap.

In the signal comparing step (ADC _Active & Tsync Comparison) S120, as illustrated in FIGS. 7A and 7B, when both the ADC active signal ADC _Active and the synchronization signal Tsync are high levels, a high level overlap signal OS is generated. In this case, after performing the PWM modulating step (PWM modulation) S130, the touch driving signal output step (TDS output) S140 is performed.

As illustrated in FIGS. 7C and 7D, when any one of the ADC active signal ADC _Active and the synchronization signal Tsync is a low level, a low level overlap signal OS is generated. In this case, the touch driving signal output step (TDS output) S140 is performed without performing the PWM modulating step (PWM modulation) S130.

In the PWM modulating step (PWM modulation) S130, when the overlap signal OS is a high level, at least one of the plurality of pulses of the PWM signal PWM is removed. Specifically, when the overlap signal OS is a high level in the PWM modulating step (PWM modulation) S130, a last pulse among the plurality of pulses of the PWM signal PWM may be sequentially removed.

For example, as illustrated in FIGS. 7A and 7B, when the overlap signal OS is a high level in the first frame period 1^{st} Frame, in the second frame period 2^{nd} Frame, the last pulse of the third PWM signal 3^{rd} PWM is removed.

As another example, as illustrated in FIG. 7B and 7C, when the overlap signal OS is a high level in the second frame period 2^{nd} Frame, in the third frame period 3^{rd} Frame, the last pulse of the third PWM signal 3^{rd} PWM is removed.

As another example, as illustrated in FIG. 7B and 7D, when the overlap signal OS is a high level in the second frame period 2^{nd} Frame, in the third frame period 3^{rd} Frame, the last pulse of the second PWM signal 2^{nd} PWM is removed.

That is, in the PWM modulating step (PWM modulation) S130, at least one of the plurality of pulses of the PWM signal PWM is removed to generate a modulated PWM signal MPWM.

In the touch driving signal output step (TDS output) S140, the modulated PWM signal MPWM or the PWM signal PWM is output to the touch electrode TE of the touch panel 113 as a touch driving signal TDS.

Specifically, when the overlap signal OS is a high level, in the PWM modulating step (PWM modulation) S130, at least one pulse of the plurality of pulses of the PWM signal PWM is removed to generate a modulated PWM signal MPWM. Further, in the touch driving signal output step (TDS output) S140, the modulated PWM signal MPWM is output to each of the plurality of touch electrodes TE as a touch driving signal TDS.

In contrast, when the overlap signal OS is a low level, the PWM modulating step (PWM modulation) S130 is not performed, but in the touch driving signal output step (TDS output) S140, the PWM signal PWM in which the pulse is not removed is output to each of the plurality of touch electrodes TE as a touch driving signal TDS.

In the touch sensing signal input step (TSS input) S150, the touch sensing circuit 141 receives an analog touch sensing signal TSS which is detected by each touch electrode TE applied with the touch driving signal TDS. In the touch sensing signal input step (TSS input) S150, the plurality of touch sensing signals TSS is integrated and the integral value INT_TSS of the touch sensing signal is sampled and held.

In the analog to digital converting step S160, the integral value INT_TSS of the analog touch sensing signal is input to be converted into the digital sensing data SD.

In the sensing data transmitting step (SD transmission) S170, the digital sensing data SD is transmitted to determine touch information about the presence of touch and a touch position based thereon.

The sensing data SD transmission is a master-slave architecture and the data is transmitted and received by the communication interface I/F. The above-described communication interface I/F may be a serial peripheral interface SPI.

As described above, in the PWM modulating step (PWM modulation) S130 of the driving method of the touch display device according to the exemplary embodiment of the present disclosure, the number of pulses of the PWM signal may be reduced depending on whether the ADC active signal ADC _Active and the synchronization signal Tsync overlap. By doing this, the timing of performing the analog to digital converting step S160 may be advanced. Therefore, in the driving method of the touch display device according to the exemplary embodiment of the present disclosure, the analog to digital converting step S160 may be completed within the touch sensing period. As a result, in the driving method of the touch display device according to the exemplary embodiment of the present disclosure, jitter is not generated in the digitally converted sensing data SD due to the source channel toggle for the display driving so that the touch performance may be improved.

Hereinafter, a driving method of a touch display device according to another exemplary embodiment (a second exemplary embodiment) of the present disclosure will be described. A driving method of a touch display device according to another exemplary embodiment (a second exemplary embodiment) of the present disclosure is the same as the driving method of a touch display device according to the exemplary embodiment of the present disclosure except a sensing data compensating step and a compensated sensing data transmitting step. Hereinafter, the sensing data compensating step and the compensated sensing data transmitting step of the driving method of a touch display device according to another exemplary embodiment (a second exemplary embodiment) of the present disclosure will be described in detail.

FIG. 11 is a flowchart for explaining a driving method of a touch display device according to another exemplary embodiment (a second exemplary embodiment) of the present disclosure.

A driving method S200 of the touch display device according to another exemplary embodiment (a second exemplary embodiment) includes a PWM generating step (PWM generation) S110, a signal comparing step (ADC_Active & Tsync comparison) S120, a PWM modulating step (PWM modulation) S130, a touch driving signal output step (TDS output) S140, a touch sensing signal input step (TSS input) S150, an analog to digital converting step S160, a sensing data compensating step (SD compensating) S270, and a compensated sensing data transmitting step (CSD transmission) S280.

The PWM generating step (PWM generation) S110, the signal comparing step (ADC_Active & Tsync comparison) S120, the PWM modulating step (PWM modulation) S130, the touch driving signal output step (TDS output) S140, the touch sensing signal input step (TSS input) S150, and the analog to digital converting step S160 of the driving method S200 of the touch display device according to another exemplary embodiment (a second exemplary embodiment) is the same as those of the driving method S100 of the touch display device according to the exemplary embodiment of the present disclosure. Therefore, a description thereof will be omitted.

In the sensing data compensating step (SD compensating) S270, the digital sensing data SD converted in the analog to digital converting step S160 is compensated to generate digital compensated sensing data CSD.

As described above, in the PWM modulating step (PWM modulation) S130, some of the pulses of the PWM signal PWM is removed depending on whether the ADC active signal ADC _Active and the synchronization signal Tsync overlap. That is, as illustrated in FIG. 9, a twelfth pulse which is the last pulse of the second PWM signal 2^{nd} PWM is removed.

Therefore, in the sensing data compensating step (SD compensating) S270, after calculating sensing data corresponding to the number of removed pulses, the digital sensing data SD converted in the analog to digital converting step S160 is added to generate digital compensated sensing data CSD.

For example, when it is assumed that sensing data SD by a first pulse to an eleventh pulse of the second PWM signal 2^{nd} PWM is 1100, average sensing data for one pulse of the second PWM signal 2^{nd} PWM may be set to 100. That is, the sensing data corresponding to the removed twelfth pulse may be set to 100.

Therefore, in the sensing data compensating step (SD compensating) S270, 100 which is the sensing data corresponding to the removed twelfth pulse is added to 1100 which is the sensing data SD by the first pulse to the eleventh pulse to generate the compensated sensing data CSD.

In the compensated sensing data transmitting step (CSD transmission) S280, the digital compensated sensing data CSD is transmitted to determine touch information about the presence of touch and a touch position based thereon.

In the driving method of the touch display device according to another exemplary embodiment (a second exemplary embodiment) of the present disclosure, the sensing data corresponding to the removed pulse of the PWM signal is added to the sensing data to compensate for the digital sensing data.

Therefore, in the driving method of the touch display device according to another exemplary embodiment (a second exemplary embodiment) of the present disclosure, jitter is not generated in the sensing data. Further, even though the PWM signal is partially removed, the sensing data may not be damaged.

As a result, the driving method of the touch display device according to another exemplary embodiment (second exemplary embodiment) of the present disclosure allows the touch sensing to be more accurately performed.

Hereinafter, a touch display device according to still another exemplary embodiment (a third exemplary embodiment) of the present disclosure will be described. A difference between the touch display device according to the exemplary embodiment of the present disclosure and a touch display device according to still another exemplary (a third exemplary embodiment) of the present disclosure is that a sampling timing of a sample and hold circuit SHA is controlled. Hereinafter, sampling timing control of a sample and hold circuit SHA of a touch display device according to another exemplary embodiment (a second exemplary embodiment) of the present disclosure will be described in detail.

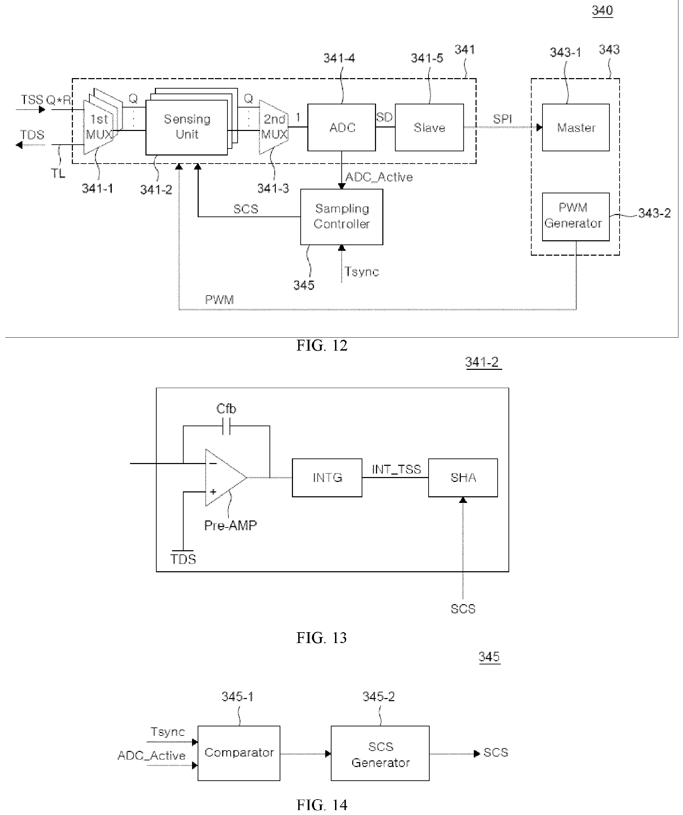

FIG. 12 is a view for explaining a touch driver of a touch display device according to still another exemplary embodiment (a third exemplary embodiment) of the present disclosure.

FIG. 13 is a view for explaining a sensing unit of a touch display device according to still another exemplary embodiment (a third exemplary embodiment) of the present disclosure.

In the touch display device according to still another exemplary embodiment (a third exemplary embodiment) of the present disclosure, a touch driver 340 may include a touch sensing circuit 341, a touch control circuit 343, and a sampling control circuit 345. The touch sensing circuit 341 may be disposed in the form of an integrated circuit IC and the touch control circuit 343 may be disposed in the form of a micro control unit MCU.

The touch sensing circuit 341 detects a touch sensing signal TSS which varies depending on whether there is a touch, by driving the touch panel 113.

Specifically, the touch sensing circuit 341 outputs a touch driving signal TDS to two or more touch electrodes TE and converts an analog touch sensing signal TSS detected by the touch electrode TE applied with the touch driving signal TDS into digital sensing data SD to transmit the converted digital sensing data to the touch control circuit 343.

That is, the touch sensing circuit 341 may perform analog to digital conversion to convert the analog touch sensing signal TSS detected by each touch electrode TE applied with the touch driving signal TDS into digital sensing data SD.

Specifically, as illustrated in FIG. 12, the touch sensing circuit 341 includes a plurality of first multiplexers 341-1, a plurality of sensing units 341-2, a second multiplexer 341-3, an analog to digital converter ADC 341-4, and a slave processor 341-5.

Each of the plurality of first multiplexers 341-1 selects one touch sensing signal TSS among a plurality of touch sensing signals TSS output from one column of touch electrodes TE. Specifically, each of the plurality of first multiplexers 341-1 is a circuit which is connected to a plurality of touch lines TL connected to one column of touch electrodes TE and performs R : 1 multiplexing. For example, Q first multiplexers 341-1 may select Q touch sensing signals TSS among touch sensing signals TSS received from the plurality of touch electrodes TE disposed in the Q × R matrix.

The Q first multiplexers may be Q MUXs connected to Q columns of touch electrodes TE illustrated in FIG. 2.

The plurality of sensing units 341-2 integrates a plurality of touch sensing signals TSS and samples an integral value INT_TSS of the touch sensing signal. Each of the plurality of sensing units 341-2 may output the touch driving signal TDS to the corresponding touch electrode TE of the touch panel 113.

Further, each of the plurality of sensing units 341-2 is connected to each of the plurality of first multiplexers 341-1 one to one to integrate the touch sensing signal TSS selected by the first multiplexer 341-1 or output the touch driving signal TDS through the first multiplexer 341-1.

For example, Q sensing units 341-2 may be connected to Q first multiplexers 341-1 one to one.

Referring to FIG. 13, each of the plurality of sensing units 341-2 includes a preamplifier Pre-AMP, an integrator INTG, and a sample and hold circuit SHA.

The preamplifier Pre-AMP stores a charge corresponding to a capacitance formed between the touch electrode TE and a touched object. Specifically, a charge corresponding to a capacitance formed between the touch electrode TE and a touched object is stored in a feedback capacitor Cfb of the preamplifier Pre-AMP.

The preamplifier Pre-AMP may output the input touch driving signal TDS to the touch electrode TE through the first multiplexer 141-1.

The integrator INTG outputs an integral value INT_TSS of the touch sensing signal which is an output voltage of the preamplifier Pre-AMP.

Such an integrator INTG may be configured by elements such as a comparator or a capacitor. A signal output from the integrator INTG is input to the sample and hold circuit SHA.

The sample and hold circuit SHA is a circuit configured to samples and holds the integral value INT_TSS of the touch sensing signal, and holds the integral value INT_TSS of the touch sensing signal until the analog to digital converter ADC 341-4 ends previous conversion.

In the touch display device according to still another exemplary embodiment (a third exemplary embodiment) of the present disclosure, the sampling timing of the sample and hold circuit SHA may be controlled by a sampling control signal SCS output from the sampling control circuit 345.

Referring to FIG. 12, the second multiplexer 341-3 selects one touch sensing signal TSS among a plurality of touch sensing signals TSS output from the plurality of sensing units 341-2. Specifically, the second multiplexer 341-3 is a circuit which is connected to the plurality of sensing units 341-2 and performs Q : 1 multiplexing. For example, the second multiplexer 341-3 selects one of Q sensing units 341-2 to input a voltage which is held in the sample and hold circuit SHA of the selected sensing unit 341-2 to the analog to digital converter ADC 341-4.

The analog to digital converter ADC 341-4 converts the input voltage into digital sensing data SD to output the converted digital sensing data.

The output digital sensing data SD is transmitted to the touch control circuit 343 via the slave processor 341-5 of the touch sensing circuit 341.

In the period in which the analog to digital converter ADC 141-4 converts the integral value INT_TSS of the touch sensing signal into digital sensing data SD, the analog to digital converter ADC 141-4 may output an ADC active signal ADC _Active to the PWM modulator 145. That is, during the period in which the analog to digital converter ADC 141-4 outputs the integral value INT_TSS of the touch sensing signal as digital sensing data SD, the ADC active signal ADC_Active may be a high level.

In summary, during the touch driving processing, the analog to digital conversion processing, and the sensing data SD transmission processing, the touch sensing circuit 341 performs analog to digital conversion processing after performing touch driving processing. Further, the touch sensing circuit 341 sequentially (serially) performs the sensing data SD transmission processing after completing all the analog to digital conversion processing.

The touch control circuit 343 generates a PWM signal PWM including a plurality of pulses and receives the digital sensing data SD to determine touch information about the presence of touch and a touch position based thereon.

The touch control circuit 343 may include a master processor 343-1 and a PWM generator 343-2.

The slave processor 341-5 of the touch sensing circuit 341 and the master processor 343-1 of the touch control circuit 343 form a master-slave architecture, and transmit and receive data therebetween via a communication interface I/F.

The communication interface I/F between the touch sensing circuit 341 and the touch control circuit 343 may be a serial peripheral interface SPI.

The serial peripheral interface SPI is an interface which operates in a full duplex mode which is a communication scheme that the touch sensing circuit 341 and the touch control circuit 343 simultaneously use independent lines to transmit and receive data, and is a synchronous serial data connection scheme.

The PWM generator 343-2 provides the PWM signal PWM including a plurality of pulses to each of the plurality of sensing units 341-2.

Specifically, the PWM generator 343-2 may supply the PWM signal PWM including a plurality of pulses to the plurality of sensing units 341-2 only during the touch sensing period.

FIG. 14 is a view for explaining a sampling control circuit of a touch display device according to still another exemplary embodiment (a third exemplary embodiment) of the present disclosure.

The sampling control circuit 345 controls a sampling timing of the sample and hold circuit SHA depending on whether the ADC active signal ADC _Active and the synchronization signal Tsybc overlap. That is, the sampling control circuit 345 generates a sampling control signal SCS which controls the sampling timing of the sample and hold circuit SHA only when an operation period of the analog to digital converter ADC and the display period D overlap.

The sampling control circuit 345 outputs the sampling control signal SCS to the plurality of sensing units 341-2.

Specifically, as illustrated in FIG. 14, the sampling control circuit 345 includes a comparator 345-1 and a sampling control signal generator (SCS generator) 345-2. The comparator 345-1 compares the ADC active signal ADC_Active and the synchronization signal Tsybc to determine whether the signals overlap and the sampling control signal generator 345-2 generates a sampling control signal SCS to control the sampling timing of the sample and hold circuit SHA.

The comparator 345-1 is applied with the ADC active signal ADC _Active and the synchronization signal Tsync and when both the ADC active signal ADC _Active and the synchronization signal Tsync are high levels, generates a high level overlap signal OS. When any one of the ADC active signal ADC _Active and the synchronization signal Tsync is a low level, the comparator 345-1 generates a low level overlap signal OS.

The above-described operation of the comparator 345-1 is based on the assumption that when the synchronization signal Tsync is a low level, it is a touch sensing period T and when the synchronization signal Tsync is a high level, it is a display period D.

However, the present disclosure is not limited thereto and in case that when the synchronization signal Tsync is a high level, it is a touch sensing period T and when the synchronization signal Tsync is a low level, it is a display period D, the operation of the comparator 345-1 is as follows.

When the ADC active signal ADC _Active is a high level and the synchronization signal Tsync is a low level, the comparator 345-1 generates a high level overlap signal OS. In contrast, when both the ADC active signal ADC _Active and the synchronization signal Tsync are low levels, the comparator 345-1 generates a low level overlap signal OS.

When the overlap signal OS is a high level, the sampling control signal generator 345-2 generates the sampling control signal SCS which controls the sampling timing of the sample and hold circuit SHA. Specifically, when the overlap signal OS is a high level, the sampling control signal generator 345-2 generates a sampling control signal SCS which controls the sample and hold circuit SHA to perform the sampling before outputting the last pulse of the plurality of pulses of the PWM signal PWM.

Even though in FIG. 12, it is illustrated that the sampling control circuit 345 is disposed separately from the touch sensing circuit 341 and the touch control circuit 343, the present disclosure is not limited thereto. That is, the sampling control circuit 345 may be included in an integrated circuit IC type touch sensing circuit 341 or a micro control unit MCU type touch control circuit 343.

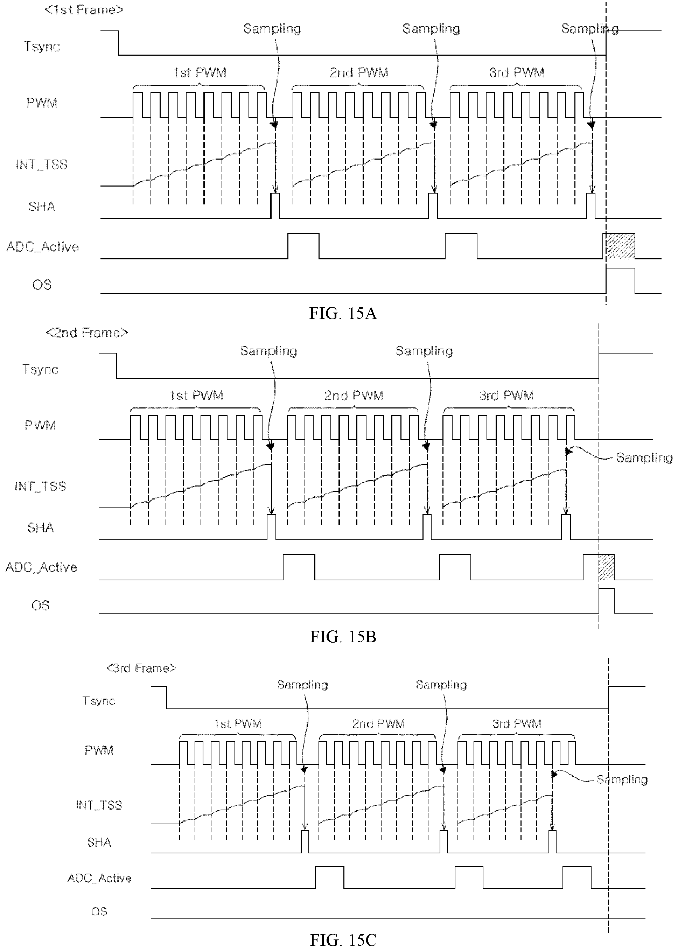

Hereinafter, the sampling timing of the sample and hold circuit SHA by the sampling control signal SCS in the touch display device according to another exemplary embodiment (a third exemplary embodiment) of the present disclosure will be described with reference to FIGS. 15A to 15D.

FIGS. 15A to 15D are views for explaining an operation of a PWM modulator of a touch display device according to still another exemplary embodiment (a third exemplary embodiment) of the present disclosure.

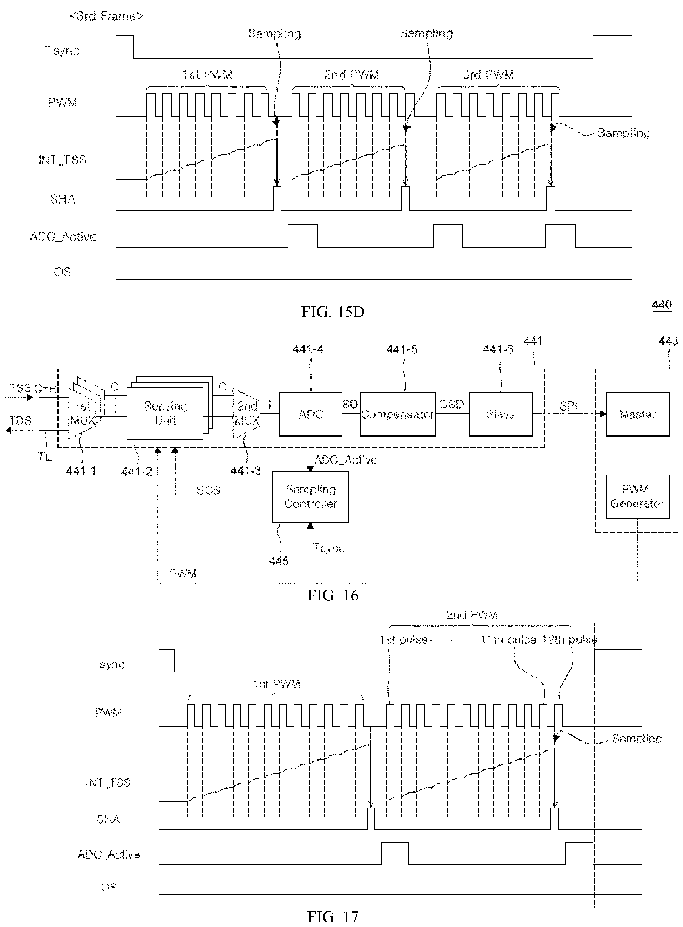

Specifically, FIG. 15A illustrates various signals for touch sensing in a touch sensing period of a first frame period 1^{st} Frame, FIG. 15B illustrates various signals for touch sensing in a touch sensing period of a second frame period 2^{nd} Frame, and FIGS. 15C and 15D illustrate various signals for touch sensing in a touch sensing period of a third frame period 3^{rd} Frame.

Referring to FIG. 15A, during the touch sensing period of the first frame period 1^{st} Frame, the plurality of PWM signals PWM is transmitted.

For example, three PWM signals PWM are illustrated. A first PWM signal 1^{st} PWM is output to the touch electrode TE via the first sensing unit 341-2 and a first first multiplexer 341-1, as a touch driving signal TDS. A second PWM signal 2^{nd} PWM is output to the touch electrode TE via the second sensing unit 341-2 and a second first multiplexer 341-1, as a touch driving signal TDS. A third PWM signal 3^{rd} PWM is output to the touch electrode TE via a third sensing unit 341-2 and a third first multiplexer 341-1, as a touch driving signal TDS.

In the first frame period 1^{st} Frame, the synchronization signal Tsync falls from a high level to a low level so that the touch display device 100 is changed from the display mode to the touch sensing mode.

In the above-description, the operation is based on the assumption that when the synchronization signal Tsync is a low level, it is a touch sensing period T and when the synchronization signal Tsync is a high level, it is a display period D.

However, the present disclosure is not limited thereto and in case that when the synchronization signal Tsync is a high level, it is a touch sensing period T and when the synchronization signal Tsync is a low level, it is a display period D, the synchronization signal Tsync rises from a low level to a high level. Therefore, the touch display device 100 is changed from the display mode to the touch sensing mode.

Next, the touch driving signal TDS is generated using the first PWM signal 1^{st} PWM and the generated touch driving signal TDS is output to a first touch electrode TE column. After a falling time of the last pulse of the first PWM signal 1^{st} PWM, the sample and hold circuit SHA of the first sensing unit 341-2 is driven to sample and hold the integral value INT_TSS of the touch sensing signal. The analog to digital converter ADC 141-4 receives the integral value INT_TSS of the analog touch sensing signal to convert the integral value into the digital sensing data SD. At this time, the analog to digital converter ADC 141-4 may output a high level ADC active signal ADC Active.

Further, while the ADC active signal ADC _Active is a high level, the touch driving signal TDS is generated using the second PWM signal 2^{nd} PWM and the generated touch driving signal TDS is output to a second touch electrode TE column. After a falling time of the last pulse of the second PWM signal 2^{nd} PWM, the sample and hold circuit SHA of the second sensing unit 341-2 is driven to sample and hold the integral value INT_TSS of the touch sensing signal. While the ADC active signal ADC _Active is a high level, the analog to digital converter ADC 341-4 receives the integral value INT _TSS of the analog touch sensing signal to convert the integral value into the digital sensing data SD.

Further, while the ADC active signal ADC_Active is a high level, the touch driving signal TDS is generated using the third PWM signal 3^{rd} PWM and the generated touch driving signal TDS is output to a third touch electrode TE column. After a falling time of the last pulse of the third PWM signal 3^{rd} PWM, the sample and hold circuit SHA of the third sensing unit 341-2 is driven to sample and hold the integral value INT_TSS of the touch sensing signal. While the ADC active signal ADC _Active is a high level, the analog to digital converter ADC 341-4 receives the integral value INT_TSS of the analog touch sensing signal to convert the integral value into the digital sensing data SD.

However, after outputting the third PWM signal 3^{rd} PWM, while the ADC active signal ADC _Active is a high level, the synchronization signal Tsync rises to a high level. Therefore, while both the ADC active signal ADC _Active and the synchronization signal Tsync are high levels, the comparator 345-1 generates a high level overlap signal OS. The sampling control signal generator 345-2 applied with the high level overlap signal OS generates a sampling control signal SCS which advances the sampling timing of the third PWM signal 3^{rd} PWM of the subsequent frame.

Therefore, as illustrated in FIG. 15B, during the second frame period 2^{nd} Frame, the first PWM signal 1^{st} PWM, the second PWM signal 2^{nd} PWM, and the third PWM signal 3^{rd} PWM are output with eight pulses similarly to the first frame period 1^{st} Frame. However, due to the sampling control signal SCS generated in the first frame period 1^{st} Frame which is a previous frame, after falling seven pulses among eight pulses of the third PWM signal 3^{rd} PWM of the second frame period 2^{nd} Frame, the sample and hold circuit SHA performs the sampling. The PWM signal PWM which includes eight pulses is merely an example and the number of PWM signals PWM may be plural (N, N is a natural number of 1 or larger). In this case, after falling N-1 pulses of the third PWM signal 3^{rd} PWM, the sample and hold circuit SHA performs the sampling.

Therefore, the sample and hold circuit SHA samples and holds the integral value INT_TSS of the touch sensing signal corresponding to seven pulses of eight pulses of the third PWM signal 3^{rd} PWM. In other words, the sample and hold circuit SHA samples and holds the integral value INT_TSS of the touch sensing signal corresponding to N-1 pulses of N pulses of the third PWM signal 3^{rd} PWM. While the ADC active signal ADC_Active is a high level, the analog to digital converter ADC 341-4 receives the integral value INT_TSS of the analog touch sensing signal to convert the integral value into the digital sensing data SD.

However, after outputting the third PWM signal 3^{rd} PWM, while the ADC active signal ADC_Active is a high level, the synchronization signal Tsync rises to a high level. Therefore, while both the ADC active signal ADC_Active and the synchronization signal Tsync are high levels, the comparator 345-1 generates a high level overlap signal OS. The sampling control signal generator 345-2 which is applied with the high level overlap signal OS may generate the sampling control signal SCS which advances a sampling timing of the third PWM signal 3^{rd} PWM of a subsequent frame (illustrated in FIG. 15C) or advances a sampling timing of the second PWM signal 2^{nd} PWM (illustrated in FIG. 15D).

Therefore, as illustrated in FIG. 15C, during the third frame period 3^{rd} Frame, the first PWM signal 1^{st} PWM, the second PWM signal 2^{nd} PWM, and the third PWM signal 3^{rd} PWM are output with eight pulses similarly to the first frame period 1^{st} Frame. However, due to the sampling control signal SCS generated in the second frame period 2^{nd} Frame which is a previous frame, after falling six pulses among eight pulses of the third PWM signal 3^{rd} PWM of the third frame period 3^{rd} Frame, the sample and hold circuit SHA performs the sampling. In other words, after falling N-2 pulses of the third PWM signal 3^{rd} PWM, the sample and hold circuit SHA may perform the sampling.

Therefore, the sample and hold circuit SHA samples and holds the integral value INT_TSS of the touch sensing signal corresponding to six pulses of eight pulses of the third PWM signal 3^{rd} PWM. In other words, the sample and hold circuit SHA samples and holds the integral value INT_TSS of the touch sensing signal corresponding to N-2 pulses of N pulses of the third PWM signal 3^{rd} PWM. While the ADC active signal ADC _Active is a high level, the analog to digital converter ADC 341-4 receives the integral value INT _TSS of the analog touch sensing signal to convert the integral value into the digital sensing data SD.

Therefore, as illustrated in FIG. 15D, during the third frame period 3^{rd} Frame, the first PWM signal 1^{st} PWM, the second PWM signal 2^{nd} PWM, and the third PWM signal 3^{rd} PWM are output with eight pulses similarly to the first frame period 1^{st} Frame. However, due to the sampling control signal SCS generated in the second frame period 2^{nd} Frame which is a previous frame, after falling seven pulses among eight pulses of the second PWM signal 2^{nd} PWM of the third frame period 3^{rd} Frame, the sample and hold circuit SHA performs the sampling. In other words, after falling N-1 pulses of the second PWM signal 2^{nd} PWM, the sample and hold circuit SHA performs the sampling.

Therefore, the sample and hold circuit SHA samples and holds the integral value INT_TSS of the touch sensing signal corresponding to seven pulses of eight pulses of the second PWM signal 2^{nd} PWM. In other words, the sample and hold circuit SHA samples and holds the integral value INT_TSS of the touch sensing signal corresponding to N-1 pulses of N pulses of the second PWM signal 2^{nd} PWM. While the ADC active signal ADC _Active is a high level, the analog to digital converter ADC 341-4 receives the integral value INT _TSS of the analog touch sensing signal to convert the integral value into the digital sensing data SD.

However, after outputting the third PWM signal 3^{rd} PWM, the ADC active signal ADC_Active falls to a low level, the synchronization signal Tsync rises to a high level. Therefore, there is no period in which both the ADC active signal ADC_Active and the synchronization signal Tsync are high levels in the third frame period, so that the comparator 345-1 generates a low level overlap signal OS. The sampling control signal generator 345-2 which is applied with the high level overlap signal OS does not output the generated sampling control signal SCS so that the sampling timing is not advanced in the subsequent frame.

As described above, the sampling control circuit 345 of the touch display device according to still another exemplary embodiment (a third exemplary embodiment) of the present disclosure adjusts the sampling timing of the sample and hold circuit SHA to sequentially advance the period in which the analog to digital converter operates. By doing this, the operation of the analog to digital converter may be completed within the touch sensing period of the touch display device according to still another exemplary embodiment (a third exemplary embodiment) of the present disclosure.

As a result, also in the touch display device according to another exemplary embodiment of the present disclosure (a third exemplary embodiment), jitter is not generated in the digitally converted sensing data due to the source channel toggle for the display driving so that the touch performance may be improved.

Hereinafter, a touch display device according to still another exemplary embodiment (a fourth exemplary embodiment) of the present disclosure will be described. The touch display device according to another exemplary embodiment (third exemplary embodiment) of the present disclosure and a touch display device according to still another exemplary embodiment (a fourth exemplary embodiment) of the present disclosure are the same except that a compensator configured to compensate for sensing data is added. Hereinafter, a compensator of a touch display device according to still another exemplary embodiment (a fourth exemplary embodiment) of the present disclosure will be described in detail.

FIG. 16 is a view for explaining a touch driver of a touch display device according to still another exemplary embodiment (a fourth exemplary embodiment) of the present disclosure.

In the touch display device according to still another exemplary embodiment (a fourth exemplary embodiment) of the present disclosure, a touch driver 440 may include a touch sensing circuit 441, a touch control circuit 443, and a sampling control circuit 445.

The touch control circuit 443 and the sampling control circuit 445 are the same as the touch control circuit 343 and the sampling control circuit 345 of the touch display device according to another exemplary embodiment (a third exemplary embodiment) of the present disclosure, so that a redundant description will be omitted.

The touch sensing circuit 441 detects a touch sensing signal TSS which varies depending on whether there is a touch, by driving the touch panel 113.

Specifically, the touch sensing circuit 441 outputs a touch driving signal TDS to two or more touch electrodes TE and converts an analog touch sensing signal TSS detected by the touch electrode TE applied with the touch driving signal TDS into digital sensing data SD to transmit the converted digital sensing data to the touch control circuit 443.

That is, the touch sensing circuit 441 may perform analog to digital conversion to convert the analog touch sensing signal TSS detected by each touch electrode TE applied with the touch driving signal TDS into digital sensing data SD.

In the touch display device according to still another exemplary embodiment (a fourth exemplary embodiment) of the present disclosure, the touch sensing circuit 441 may compensate for sensing data corresponding to a touch sensing signal which is not sampled in the plurality of sensing units 441-2.

Specifically, as illustrated in FIG. 16, the touch sensing circuit 441 includes a plurality of first multiplexers 441-1, a plurality of sensing units 441-2, a second multiplexer 441-3, an analog to digital converter ADC 441-4, a data compensator 441-5, and a slave processor 441-6.

Each of the plurality of first multiplexers 441-1 selects one touch sensing signal TSS among a plurality of touch sensing signals TSS output from one column of touch electrodes TE. Specifically, each of the plurality of first multiplexers 441-1 is a circuit which is connected to a plurality of touch lines TL connected to one column of touch electrodes TE and performs R : 1 multiplexing. For example, Q first multiplexers 441-1 may select Q touch sensing signals TSS among touch sensing signals TSS received from the plurality of touch electrodes TE disposed in the Q × R matrix.

The plurality of sensing units 441-2 integrates a plurality of touch sensing signals TSS and samples an integral value INT_TSS of the touch sensing signal. Each of the plurality of sensing units 441-2 may output the touch driving signal TDS to the corresponding touch electrode TE of the touch panel 113.

Further, each of the plurality of sensing units 441-2 is connected to the plurality of first multiplexers 441-1 one by one to integrate the touch sensing signal TSS selected by the first multiplexer 441-1 or output the touch driving signal TDS through the first multiplexer 441-1.

For example, Q sensing units 441-2 may be connected to Q first multiplexers 441-1 one to one.

The second multiplexer 441-3 selects one touch sensing signal TSS among a plurality of touch sensing signals TSS output from the plurality of sensing units 441-2. Specifically, the second multiplexer 441-3 is a circuit which is connected to the plurality of sensing units 441-2 and performs Q : 1 multiplexing. For example, the second multiplexer 441-3 selects one of Q sensing units 441-2 to input a voltage which is held in the sample and hold circuit SHA of the selected sensing unit 441-2 to the analog to digital converter ADC 441-4.

The analog to digital converter ADC 441-4 converts the input voltage into digital sensing data SD to output the converted digital sensing data SD.

Further, during the period in which the analog to digital converter ADC 441-4 operates, the analog to digital converter ADC 441-4 may output a high level ADC active signal ADC_Active to the sampling control circuit 445.

FIG. 17 is a view for explaining an operation of a data compensator of a touch display device according to another exemplary embodiment (a fourth exemplary embodiment) of the present disclosure.

The data compensator 441-5 compensates for the converted digital sensing data SD to generate digital compensated sensing data CSD.

As described above, the sampling control circuit 345 does not sample a touch sensing signal TSS corresponding to some of the pulses of the PWM signal PWM depending on whether the ADC active signal ADC _Active and the synchronization signal Tsync overlap. That is, as illustrated in FIG. 17, after falling an eleventh pulse of the second PWM signal 2^{nd} PWM, the sample and hold circuit SHA performs the sampling. Therefore, the touch sensing signal TSS corresponding to a twelfth pulse which is the last pulse is not sampled.

Therefore, after calculating sensing data corresponding to the number of touch sensing signals which are not sampled, the data compensator 441-5 adds digital sensing data SD input from the analog to digital converter ADC 441-4 to the calculated sensing data to generate digital compensated sensing data CSD.

For example, when it is assumed that sensing data SD by a first pulse to an eleventh pulse of the second PWM signal 2^{nd} PWM is 1100, average sensing data for one pulse of the second PWM signal 2^{nd} PWM may be set to 100. That is, the sensing data corresponding to the removed twelfth pulse may be set to 100.

Therefore, the data compensator 441-5 adds 100 which is the sensing data corresponding to the twelfth pulse which is not sampled to 1100 which is the sensing data SD by the first pulse to the eleventh pulse to generate the compensated sensing data CSD.

The output digital compensated sensing data CSD is transmitted to the touch control circuit 443 through the slave processor 441-6 of the touch sensing circuit 441.

In the touch display device according to another exemplary embodiment (fourth exemplary embodiment) of the present disclosure, the sensing data corresponding to the pulse of the PWM signal which is not sampled is added to the sensing data to compensate for the digital sensing data.

Therefore, in the touch display device according to another exemplary embodiment (fourth exemplary embodiment) of the present disclosure, jitter is not generated in the sensing data. Further, even though the sampling timing of the PWM signal is advanced, the sensing data may not be damaged.

As a result, the touch display device according to another exemplary embodiment (fourth exemplary embodiment) of the present disclosure may more accurately perform the touch sensing.

Hereinafter, a driving method of a touch display device according to still another exemplary embodiment (a third exemplary embodiment) of the present disclosure will be described in detail. The driving method of a touch display device according to still another exemplary embodiment (a third exemplary embodiment) of the present disclosure will be described based on the touch display device according to still another exemplary embodiment (a third exemplary embodiment) of the present disclosure.

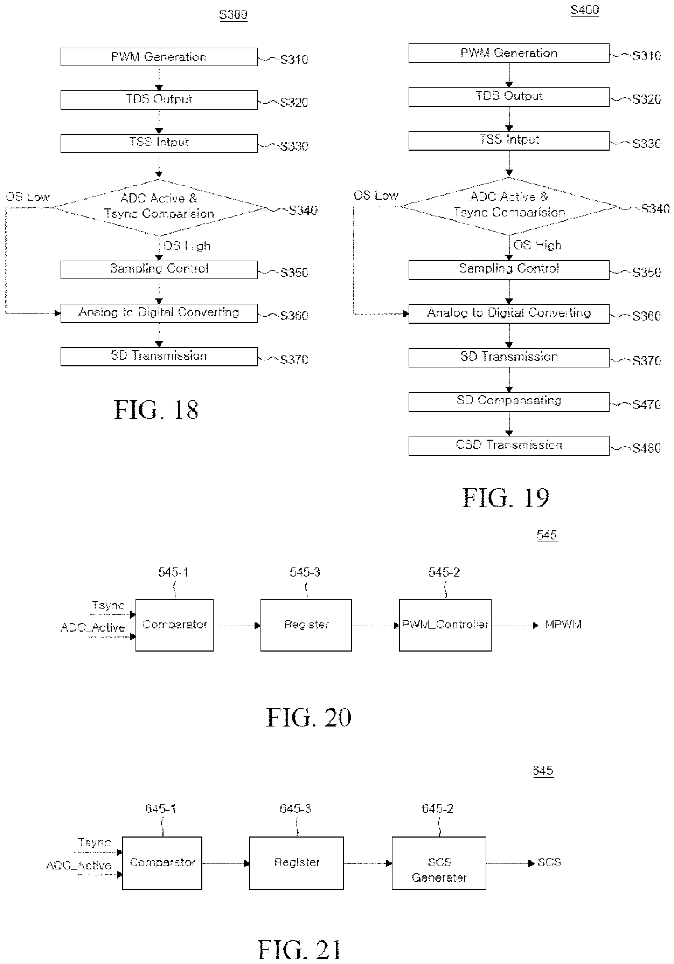

FIG. 18 is a flowchart for explaining a driving method of a touch display device according to another exemplary embodiment (a third exemplary embodiment) of the present disclosure.

A driving method S300 of the touch display device according to another exemplary embodiment (a third exemplary embodiment) of the present disclosure includes a PWM generating step (PWM generation) S310, a touch driving signal output step (TDS output) S320, a touch sensing signal input step (TSS input) S330, a signal comparing step (ADC _Active & Tsync comparison) S340, a sampling control step (sampling control) S350, an analog to digital converting step S360, and a sensing data transmitting step (SD transmission) S370.

In the PWM generating step (PWM generation) S310, a PWM signal including a plurality of pulses is generated.

Specifically, in the PWM generating step (PWM generation) S310, a plurality of PWM signals including a plurality of pulses may be generated. For example, as illustrated in FIGS. 15A to 15D, a first PWM signal 1^{st} PWM, a second PWM signal 2^{nd} PWM, and a third PWM signal 3^{rd} PWM may be output.

In the touch driving signal output step (TDS output) S320, the PWM signal PWM is output to the touch electrode TE of the touch panel 113 as a touch driving signal TDS.

Specifically, the PWM signal PWM from which the pulse is not removed is output to each of the plurality of touch electrodes TE as a touch driving signal TDS in the touch driving signal output step (TDS output) S320.

In the touch sensing signal input step (TSS input) S330, the touch sensing circuit 341 receives an analog touch sensing signal TSS which is detected by each touch electrode TE applied with the touch driving signal TDS.

In the signal comparing step (ADC _Active & Tsync Comparison) S340, the ADC active signal ADC _Active and the synchronization signal Tsync are compared to determine whether the ADC active signal ADC _Active and the synchronization signal Tsync overlap.

In the signal comparing step (ADC_Active & Tsync Comparison) S340, as illustrated in FIGS. 15A and 15B, when both the ADC active signal ADC _Active and the synchronization signal Tsync are high levels, a high level overlap signal OS is generated. In this case, according to the sampling control step S350, a timing at which the integral value INT _TSS of the touch sensing signal is sampled is controlled and then held and thereafter, the analog to digital converting step S360 is performed.

As illustrated in FIGS. 15C and 15D, respectively, when any one of the ADC active signal ADC_Active and the synchronization signal Tsync is a low level, a low level overlap signal OS is generated. In this case, without performing the sampling control step S350, after sampling and holding the integral value INT_TSS of the touch sensing signal, the analog to digital converting step S360 is performed.

In the sampling control step S350, if the overlap signal OS is a high level, the sampling timing of the sample and hold circuit SHA is advanced. Specifically, when the overlap signal OS is a high level in the sampling control step S350, the sample and hold circuit SHA may be controlled to perform the sampling before outputting the last pulse of the plurality of pulses of the PWM signal PWM.

For example, as illustrated in FIGS. 15A and 15B, when the overlap signal OS is a high level in the first frame period 1^{st} Frame, in the second frame period 2^{nd} Frame, before outputting the last pulse of the third PWM signal 3^{rd} PWM, the integral value INT_TSS of the touch sensing signal is sampled.

As another example, as illustrated in FIG. 15B and 15C, when the overlap signal OS is a high level in the second frame period 2^{nd} Frame, in the third frame period 3^{rd} Frame, before outputting the last pulse of the third PWM signal 3^{rd} PWM, the integral value INT_TSS of the touch sensing signal is sampled.

As another example, as illustrated in FIG. 15B and 15D, when the overlap signal OS is a high level in the second frame period 2^{nd} Frame, in the third frame period 3^{rd} Frame, before outputting the last pulse of the second PWM signal 2^{nd} PWM, the integral value INT_TSS of the touch sensing signal is sampled.

That is, in the sampling control step S350, the touch sensing signal TSS corresponding to at least one of the plurality of pulses of the PWM signal PWM is not sampled.

In the analog to digital converting step S360, the integral value INT_TSS of the analog touch sensing signal is input to be converted into the digital sensing data SD.

In the sensing data transmitting step (SD transmission) S370, the digital sensing data SD is transmitted to determine touch information about the presence of touch and a touch position based thereon.

The sensing data SD transmission is a master-slave architecture and the data is transmitted and received by the communication interface I/F. The communication interface I/F may be a serial peripheral interface SPI.

As described above, in the sampling control step S350 of the driving method of the touch display device according to still another exemplary embodiment (a third exemplary embodiment) of the present disclosure, the sampling timing of the touch sensing signal TSS may be controlled depending on whether the ADC active signal ADC _Active and the synchronization signal Tsync overlap. By doing this, the timing of performing the analog to digital converting step S360 may be sequentially advanced. Therefore, in the driving method of the touch display device according to another exemplary embodiment (a third exemplary embodiment) of the present disclosure, the analog to digital converting step S360 may be completed within the touch sensing period. As a result, in the driving method of the touch display device according to another exemplary embodiment (a third exemplary embodiment) of the present disclosure, jitter is not generated in the digitally converted sensing data SD due to the source channel toggle for the display driving so that the touch performance may be improved.

Hereinafter, a driving method of a touch display device according to still another exemplary embodiment (a fourth exemplary embodiment) of the present disclosure will be described. The driving method of the touch display device according to another exemplary embodiment (a third exemplary embodiment) of the present disclosure and a driving method of a touch display device according to still another exemplary embodiment (a fourth exemplary embodiment) of the present disclosure are the same except a sensing data compensating step and a compensated sensing data transmitting step. Hereinafter, the sensing data compensating step and the compensated sensing data transmitting step of the driving method of a touch display device according to another exemplary embodiment (fourth exemplary embodiment) of the present disclosure will be described in detail.

FIG. 19 is a flowchart for explaining a driving method of a touch display device according to another exemplary embodiment (a fourth exemplary embodiment) of the present disclosure.

A driving method S400 of the touch display device according to another exemplary embodiment (a fourth exemplary embodiment) of the present disclosure includes a PWM generating step (PWM generation) S310, a touch driving signal output step (TDS output) S320, a touch sensing signal input step (TSS input) S330, a signal comparing step (ADC _Active & Tsync comparison) S340, a sampling control step (sampling control) S350, an analog to digital converting step S360, a sensing data compensating step (SD compensating) S470, and a compensated sensing data transmitting step (CSD transmission) S480.

The PWM generating step (PWM generation) S310, the touch driving signal output step (TDS output) S320, the touch sensing signal input step (TSS input) S330, the signal comparing step (ADC_Active & Tsync comparison) S340, the sampling control step (sampling control) S350, and the analog to digital converting step S360 of the driving method S400 of the touch display device according to another exemplary embodiment (a fourth exemplary embodiment) of the present disclosure are the same as those of the driving method of the touch display device according to another exemplary embodiment (a third exemplary embodiment) of the present disclosure. Therefore, the description thoseof will be omitted.

In the sensing data compensating step (SD compensating) S470, the digital sensing data SD converted in the analog to digital converting step S360 is compensated to generate digital compensated sensing data CSD.

As described above, in the sampling control step S330, depending on whether the ADC active signal ADC _Active and the synchronization signal Tsync overlap, the sampling timing of the touch sensing signal TSS may be adjusted. That is, as illustrated in FIG. 17, the touch sensing signal TSS corresponding to the last pulse of the second PWM signal 2^{nd} PWM is not sampled.

Therefore, in the sensing data compensating step (SD compensating) S470, after calculating sensing data corresponding to the number of touch sensing signals which are not sampled, the digital sensing data SD converted in the analog to digital converting step S360 is added to generate digital compensated sensing data CSD.

For example, when it is assumed that sensing data SD by a first pulse to an eleventh pulse of the second PWM signal 2^{nd} PWM is 1100, average sensing data for one pulse of the second PWM signal 2^{nd} PWM may be set to 100. That is, the sensing data corresponding to the removed twelfth pulse may be set to 100.

Therefore, in the sensing data compensating step (SD compensating) S470, 100 which is the sensing data corresponding to the removed twelfth pulse is added to 1100 which is the sensing data SD by the first pulse to the eleventh pulse to generate the compensated sensing data CSD.

In the compensated sensing data transmitting step (CSD transmission) S480, the digital compensated sensing data CSD is transmitted to determine touch information about the presence of touch and a touch position based thereon.

In the driving method of the touch display device according to another exemplary embodiment (a fourth exemplary embodiment) of the present disclosure, the sensing data corresponding to the pulse of the PWM signal which is not sampled is added to the sensing data to compensate for the digital sensing data.

Therefore, in the driving method of the touch display device according to still another exemplary embodiment (a fourth exemplary embodiment) of the present disclosure, jitter is not generated in the sensing data. Further, even though the PWM signal is partially removed, the sensing data may not be damaged.

As a result, the driving method of the touch display device according to another exemplary embodiment (a fourth exemplary embodiment) of the present disclosure allows the touch sensing to be more accurately performed.

Hereinafter, a touch display device according to still another exemplary embodiment (a fifth exemplary embodiment) of the present disclosure will be described. A difference between the touch display device according to the exemplary embodiment of the present disclosure and a touch display device according to still another exemplary embodiment (a fifth exemplary embodiment) is whether a PWM modulator operates depending on different types of touches. Hereinafter, a PWM modulator of a touch display device according to still another exemplary embodiment (a fifth exemplary embodiment) of the present disclosure will be described in detail.

FIG. 20 is a view for explaining a PWM modulator of a touch display device according to still another exemplary embodiment (a fifth exemplary embodiment) of the present disclosure.

As illustrated in FIG. 20, a PWM modulator 545 according to still another exemplary embodiment (a fifth exemplary embodiment) of the present disclosure includes a comparator 545-1 which compares the ADC active signal ADC_Active and the synchronization signal Tsync to determine whether the signals overlap, a PWM controller 545-2 which adjusts the number of pulses of the PWM signal PWM, and a register 545-3 configured to determine whether the PWM controller operates.

The comparator 545-1 is applied with the ADC active signal ADC _Active and the synchronization signal Tsync and when both the ADC active signal ADC_Active and the synchronization signal Tsync are high levels, generates a high level overlap signal OS. When any one of the ADC active signal ADC _Active and the synchronization signal Tsync is a low level, the comparator 545-1 generates a low level overlap signal OS.

In the meantime, as illustrated in FIG. 3C, in one frame, during each of the plurality of touch sensing periods (T1, T2, T3, T4, T5, and T6), any one of pen position sensing, pen data sensing, and finger position sensing is performed.

With regard to this, a frequency of a touch driving signal required for pen position sensing, a frequency of a touch driving signal required for pen data sensing, and a frequency required for finger position sensing may be different from each other. Therefore, frequencies of touch driving signals output in the first touch sensing period T1 and the fourth touch sensing period T4, frequencies of touch driving signals output in the second touch sensing period T2 and the fifth touch sensing period T5, and frequencies of touch driving signals output in the third touch sensing period T3 and the sixth touch sensing period T6 are different from each other.

Therefore, overlap signals OS in the touch sensing periods T1 and T4 in which the pen position is sensed, overlap signals OS in the touch sensing periods T2 and T5 in which the pen data is sensed, and overlap signals OS in the touch sensing periods T3 and T6 in which the finger position is sensed may be different from each other.

The register 545-3 stores the overlap signal OS for every touch sensing period which performs different types of touches.

That is, the register 545-3 stores a level of an overlap signal OS in the touch sensing periods T1 and T4 in which the pen position is sensed, a level of an overlap signal OS in the touch sensing periods T2 and T5 in which the pen data is sensed, and a level of an overlap signal OS in the touch sensing periods T3 and T6 in which the finger position is sensed.

The level of the overlap signal OS refers to a high level or a low level of the overlap signal OS output by the comparator 545-1 in each touch sensing period (T1, T2, T3, T4, T5, and T6) of a previous frame.

In other words, referring to FIG. 3C, the register 545-3 stores a level of the overlap signal OS in the first touch sensing period T1 and the fourth touch sensing period T4, a level of the overlap signal OS in the second touch sensing period T2 and the fifth touch sensing period T5, and a level of the overlap signal OS in the third touch sensing period T3 and the sixth touch sensing period T6.

In some exemplary embodiments, the register 545-3 may not store the overlap signal OS output from the comparator 545-1, but may autonomously store a setting value of the overlap signal OS.

When the overlap signal OS in each touch sensing period stored in the register 545-3 is a high level, the PWM controller 545-2 removes at least one of the plurality of pulses of the PWM signal PWM. Specifically, when the overlap signal OS in each touch sensing period stored in the register 545-3 is a high level, the PWM controller 545-2 may sequentially remove the last pulse among the plurality of pulses of the PWM signal PWM.

Accordingly, the PWM controller 545-2 may remove or may not remove at least one of the plurality of pulses of the PWM signal PWM for every touch sensing period in which different types of touches are performed.

For example, when in the register 545-3, the overlap signal OS in the first touch sensing period T1 and the fourth touch sensing period T4 is stored as a low level, the overlap signal OS in the second touch sensing period T2 and the fifth touch sensing period T5 is stored as a high level, and the overlap signal OS in the third touch sensing period T3 and the sixth touch sensing period T6 is stored as a low level, only in the second touch sensing period T2 and the fifth touch sensing period T5, at least one pulse of the plurality of pulses of the PWM signal PWM may be removed.

That is, the touch display device according to still another exemplary embodiment (a fifth exemplary embodiment) of the present disclosure may determine whether to modulate the PWM signal for every touch sensing period in which different types of touches are performed.

Accordingly, the touch display device according to still another exemplary embodiment (a fifth exemplary embodiment) of the present disclosure modulates the PWM signal suitable for the touch type so that it is possible to suppress the jitter generated in the sensing data with reduced power consumption.

Hereinafter, a touch display device according to still another exemplary embodiment (a sixth exemplary embodiment) of the present disclosure will be described. The difference between the touch display device according to still another exemplary embodiment (a third exemplary embodiment) and a touch display device according to still another exemplary embodiment (a sixth exemplary embodiment) of the present disclosure is an operation of the sampling control circuit according to different types of touches. Hereinafter, a sampling control circuit of a touch display device according to still another exemplary embodiment (a sixth exemplary embodiment) of the present disclosure will be described in detail.

FIG. 21 is a view for explaining a sampling control circuit of a touch display device according to still another exemplary embodiment (a sixth exemplary embodiment) of the present disclosure.

As illustrated in FIG. 21, a sampling control circuit 645 according to still another exemplary embodiment (a sixth exemplary embodiment) of the present disclosure includes a comparator 645-1 which compares the ADC active signal ADC_Active and the synchronization signal Tsync to determine whether the signals overlap, a sampling control signal generator (SCS_Generator) 645-2 configured to generate a sampling control signal SCS to control a sampling timing of a sample and hold circuit SHA, and a register 645-3 configured to determine whether the sampling control signal generator operates.

The comparator 645-1 is applied with the ADC active signal ADC _Active and the synchronization signal Tsync and when both the ADC active signal ADC_Active and the synchronization signal Tsync are high levels, generates a high level overlap signal OS. When any one of the ADC active signal ADC _Active and the synchronization signal Tsync is a low level, the comparator 645-1 generates a low level overlap signal OS.

In the meantime, as illustrated in FIG. 3C, in one frame, during each of the plurality of touch sensing periods T1, T2, T3, T4, T5, and T6, any one of pen position sensing, pen data sensing, and finger position sensing is performed.

With regard to this, a frequency of a touch driving signal required for pen position sensing, a frequency of a touch driving signal required for pen data sensing, and a frequency required for finger position sensing may be different from each other. Therefore, frequencies of touch driving signals output in the first touch sensing period T1 and the fourth touch sensing period T4, frequencies of touch driving signals output in the second touch sensing period T2 and the fifth touch sensing period T5, and frequencies of touch driving signals output in the third touch sensing period T3 and the sixth touch sensing period T6 are different from each other.

Therefore, overlap signals OS in the touch sensing periods T1 and T4 in which the pen position is sensed, overlap signals OS in the touch sensing periods T2 and T5 in which the pen data is sensed, and overlap signals OS in the touch sensing periods T3 and T6 in which the finger position is sensed may be different from each other.

The register 645-3 stores the overlap signal OS for every touch sensing period which performs different types of touches. That is, the register 645-3 stores a level of an overlap signal OS in the touch sensing periods T1 and T4 in which the pen position is sensed, a level of an overlap signal OS in the touch sensing periods T2 and T5 in which the pen data is sensed, and a level of an overlap signal OS in the touch sensing periods T3 and T6 in which the finger position is sensed.

In other words, referring to FIG. 3C, the register 645-3 stores a level of the overlap signal OS in the first touch sensing period T1 and the fourth touch sensing period T4, a level of the overlap signal OS in the second touch sensing period T2 and the fifth touch sensing period T5, and a level of the overlap signal OS in the third touch sensing period T3 and the sixth touch sensing period T6

In some exemplary embodiments, the register 645-3 may not store the overlap signal OS output from the comparator 645-1, but may autonomously store a setting value of the overlap signal OS.

When the overlap signal OS in each touch sensing period stored in the register 645-3 is a high level, the sampling control signal generator 645-2 generates the sampling control signal SCS which controls the sampling timing of the sample and hold circuit SHA. Specifically, when the overlap signal OS in each touch sensing period stored in the register 645-3 is a high level, the sampling control signal generator 645-2 generates a sampling control signal SCS which controls the sample and hold circuit SHA to perform the sampling before outputting the last pulse of the plurality of pulses of the PWM signal PWM.

Accordingly, the PWM controller 645-2 may or may not advance the sampling timing of the sample and hold circuit SHA for every touch sensing period in which different types of touches are performed.

For example, when in the register 645-3, the overlap signal OS in the first touch sensing period T1 and the fourth touch sensing period T4 is stored as a low level, the overlap signal OS in the second touch sensing period T2 and the fifth touch sensing period T5 is stored as a high level, and the overlap signal OS in the third touch sensing period T3 and the sixth touch sensing period T6 is stored as a low level, only in the second touch sensing period T2 and the fifth touch sensing period T5, the sampling timing of the sample and hold circuit SHA is advanced.

That is, the touch display device according to still another exemplary embodiment (a sixth exemplary embodiment) of the present disclosure may determine whether to control the sampling timing for every touch sensing period in which different types of touches are performed.

Accordingly, the touch display device according to still another exemplary embodiment (a sixth exemplary embodiment) of the present disclosure controls the sampling timing suitable for the touch type so that it is possible to suppress the jitter generated in the sensing data with reduced power consumption.

Although the exemplary embodiments of the present disclosure have been described in detail with reference to the accompanying drawings, the present disclosure is not limited thereto and may be embodied in many different forms without departing from the technical concept of the present disclosure. Therefore, the exemplary embodiments of the present disclosure are provided for illustrative purposes only but not intended to limit the technical concept of the present disclosure. The scope of the technical concept of the present disclosure is not limited thereto. Therefore, it should be understood that the above-described exemplary embodiments are illustrative in all aspects and do not limit the present disclosure. The protective scope of the present disclosure is defined by the appended set of claims.

## Claims

1. A touch display device, comprising:
a touch panel (113) configured to be time-divisionally driven into a touch sensing period and a display period in a frame based on a synchronization signal (Tsync), the touch panel (111) includes a plurality of touch electrodes (TE); and
a controller configured to output the synchronization signal (Tsync),
a touch driver (140) configured to drive the touch panel (113) and configured to receive the synchronization signal (Tsync), wherein the touch driver (140) includes:
a touch sensing circuit (141) configured to supply a touch driving signal (TDS) to each of the plurality of touch electrodes (TE), the touch sensing circuit (141) is further configured to receive an analog touch sensing signal (TSS) detected by each of the plurality of touch electrodes (TE) and to sample an integral value (INT-TSS) of the analog touch sensing signal (TSS) to output digital sensing data (SD);
a touch control circuit (143) configured to generate a PWM, pulse width modulation, signal (PWM) including a plurality of pulses and configured to receive the digital sensing data (SD); wherein the touch driving signal (TDS) output by the touch sensing circuit (141) to each of the plurality of touch electrodes (TE) is based on the PWM signal; and
a sampling control circuit (145, 245, 345) configured to output a sampling control signal (MPWM, SCS) to the touch sensing circuit (141) for controlling a sampling timing of the integral value (INT-TSS) of the touch sensing signal (TSS) based on the synchronization signal (Tsync).

2. The touch display device according to claim 1, wherein the touch sensing circuit (141) includes:
a plurality of sensing units (141-2) configured to integrate the touch sensing signal (TSS) and sample the integral value (INT TSS) of the touch sensing signal (TSS); and
an analog to digital converter, ADC, (141-4) configured to convert the integral value (INT TSS) of the touch sensing signal (TSS) into the digital sensing data (SD), the analog to digital converter, ADC, (141-4) is configured to output a signal (ADC active signal) indicating an operation period of the analog to digital converter ADC (141-4).

3. The touch display device according to claim 2, wherein each of the plurality of sensing units (141-2) includes:
a preamplifier (Pre-Amp) configured to output the touch driving signal (TDS) to the plurality of touch electrodes (TE);
an integrator (INTG) configured to integrate the touch sensing signal (TSS); and
a sample and hold circuit (SHA) configured to sample and hold the integral value (INT TSS) of the touch sensing signal (TSS).

4. The touch display device according to any one of the preceding claims, wherein the sampling control circuit (145, 245, 345) is configured to output a sampling control signal (OS, SCS) when an operation period of the analog to digital converter ADC (141-1) and the display period overlap to thereby adapt the sampling timing of the integral value (INT-TSS) of the touch sensing signal (TSS).

5. The touch display device according to to any one of the precding claims 2-4, wherein the analog to digital converter ADC (141-4) is configured to output a second level of an ADC active signal (ADC_Active) to the sampling control circuit (145, 245, 345) only while the integral value (INT-TSS) of the touch sensing signal (TSS) is converted into the digital sensing data (SD) and the synchronization signal (Tsync) is a first level in the touch sensing period and is a second level in the display period.

6. The touch display device according to any one of the preceding claims, wherein the sampling control circuit (145, 245, 345) includes:
a comparator (145-1) configured to compare a signal (ADC active signal) indicating an operation period of the analog to digital converter ADC (141-4) and the synchronization signal (Tsync) and configured to output an overlap signal (OS), if the signal (ADC active signal) indicating an operation period and the synchronization signal (Tsync) overlap; and
a sampling control signal generator (145-2) configured to generate the sampling control signal (MPWM, SCS) in accordance with the overlap signal (OS).

7. The touch display device according to claim 6, wherein when both the signal (ADC active signal) indicating an operation period of the analog to digital converter ADC (141-4) and the synchronization signal (Tsync) are second levels, the comparator (145-1) is configured to generate a second level of overlap signal (OS) and when any one of the signal (ADC-active) and the synchronization signal (Tsync) is a first level, the comparator is configured to generate a first level of overlap signal (OS), preferably the sampling control signal generator (145-2) is configured to generate the sampling control signal (MPWM, SCS) only when the overlap signal (OS) is a second level.

8. The touch display device according to claim 6 or 7, wherein the sampling control circuit (145, 245, 345) further includes a register (645-3) configured to store an overlap signal (OS) for every touch sensing period in which different types of touches are performed.

9. The touch display device according to any one of the preceding claims, wherein the touch sensing circuit (2141) further includes a data compensator (241-5) configured to compensate for the digital sensing data (SD) output from the analog to digital converter (241-4) to generate digital compensated sensing data (CSD).

10. The touch display device according to claim 9, wherein the data compensator (241-5) is configured to add digital sensing data (SD) input from the analog to digital converter ADC, (241-4) to sensing data (SD) corresponding to a touch sensing signal (TSS) which is not sampled to generate the compensated sensing data (CDS).

11. A driving method of a touch display device (100) which includes a touch panel (113) which is time-divisionally driven into a touch sensing period and a display period in each of a plurality of frames based on a synchronization signal (Tsync) and includes a plurality of touch electrodes (TE); and a touch driver (140) which drives the touch panel (113), wherein the plurality of frames includes a first frame and a second frame following the first frame, the driving method comprising:
a PWM generating step (S110) of generating a PWM, pulse width modulation, signal including a plurality of pulses;
a touch driving signal (TDS) output step (S140) of outputting the PWM signal as touch driving signal (TDS) to each of the plurality of touch electrodes (TE);
a touch sensing signal (TSS) input step (S150)) for receiving an analog touch sensing signal (TSS) detected by each of the plurality of touch electrodes (TE);
a signal comparing step (S120) for determining whether a signal (ADC active signal) indicating an operation period of an analog to digital converter ADC (141-4) and the synchronization signal (Tsync) overlap to output an overlap signal (OS) in the first frame;
a sampling control step (S130) for advancing a sampling timing of an integral value (INT-TSS) of the touch sensing signal (TSS) and holding the integral value (INT-TSS) in the second frame;
an analog to digital converting step (S160) for receiving the integral value (INT-TSS) of the analog touch sensing signal (TSS) to convert the integral value (INT-TSS) into digital sensing data (SD); and
a sensing data transmitting step (S170) for transmitting the digital sensing data (SD) to determine touch information about presence of touch and a touch position based on the digital sensing data (SD).

12. The driving method according to claim 11, wherein the signal (ADC active signal) indicating an operation period of an analog to digital converter ADC (141-4) is a second level only when an analog to digital converter ADC (141-4) included in the touch driver (140) operates and the synchronization signal (Tsync) is a first level in the touch sensing period and is a second level in the display period.

13. The driving method according to claim 11 or 12, wherein in the signal comparing step (S120), when both the ADC active signal and the synchronization signal (Tsync) are second levels, a second level of an overlap signal (OS) is generated and when any one of the ADC active signal and the synchronization signal (TSync) is a first level, a first level of overlap signal (OS) is generated.

14. The driving method according to claim 13, wherein when the overlap signal (OS) is a second level, in the sampling control step (S130), an integral value (INT-TSS) of the touch sensing signal (TSS) is sampled before outputting a last pulse of the plurality of pulses of the PWM signal.

15. The driving method according to any one of the claims 11-14, further comprising: a sensing data compensating step (S270) of adding the digital sensing data SD) converted in the analog to digital converting step to sensing data (SD) corresponding to a touch sensing signal (TSS) which is not sampled in the sampling control step (S230) to generate compensated sensing data (CSD), preferably in the sensing data transmitting step (S280), the digital compensated sensing data (CSD) is transmitted to determine touch information about presence of touch and a touch position based on the compensated sensing data.

## Patentansprüche

1. Berührungsanzeigevorrichtung, die umfasst:
eine Berührungstafel (113), die konfiguriert ist, zeitlich in eine Berührungserfassungsperiode und eine Anzeigeperiode gegliedert in einem Rahmen anhand eines Synchronisationssignals (Tsync) angesteuert zu werden, wobei die Berührungstafel (111) mehrere Berührungselektroden (TE) enthält; und
eine Steuereinheit, die konfiguriert ist, das Synchronisationssignal (Tsync) auszugeben,
eine Berührungsansteuerung (140), die konfiguriert ist, die Berührungstafel (113) anzusteuern, und konfiguriert ist, das Synchronisationssignal (Tsync) zu empfangen, wobei die Berührungsansteuerung (140) enthält:
eine Berührungserfassungsschaltung (141), die konfiguriert ist, ein Berührungsansteuerungssignal (TDS) an jede der mehreren Berührungselektroden (TE) zu liefern, wobei die Berührungserfassungsschaltung (141) ferner konfiguriert ist, ein analoges Berührungserfassungssignal (TSS), das durch jede der mehreren Berührungselektroden (TE) detektiert wird, zu empfangen und einen ganzzahligen Wert (INT-TSS) des analogen Berührungserfassungssignals (TSS) abzutasten, um digitale Erfassungsdaten (SD) auszugeben;
eine Berührungssteuerschaltung (143), die konfiguriert ist, ein PWM-Signal, Impulsbreitenmodulationssignal, (PWM-Signal) zu erzeugen, das mehrere Impulse enthält und konfiguriert ist, die digitalen Erfassungsdaten (SD) zu empfangen; wobei das Berührungsansteuerungssignal (TDS), das durch die Berührungserfassungsschaltung (141) an jede der mehreren Berührungselektroden (TE) ausgegeben wird, auf dem PWM-Signal beruht; und
eine Abtaststeuerschaltung (145, 245, 345), die konfiguriert ist, ein Abtaststeuersignal (MPWM, SCS) an die Berührungserfassungsschaltung (141) auszugeben, um einen Abtastzeitpunkt des ganzzahligen Werts (INT-TSS) des Berührungserfassungssignals (TSS) anhand des Synchronisationssignals (Tsync) zu steuern.

2. Berührungsanzeigevorrichtung nach Anspruch 1, wobei die Berührungserfassungsschaltung (141) enthält:
mehrere Erfassungseinheiten (141-2), die konfiguriert sind, das Berührungserfassungssignal (TSS) zu integrieren und den ganzzahligen Wert (INT-TSS) des Berührungserfassungssignals (TSS) abzutasten; und
einen Analog/Digital-Umsetzer, ADC, (141-4), der konfiguriert ist, den ganzzahligen Wert (INT TSS) des Berührungserfassungssignals (TSS) in die digitalen Erfassungsdaten (SD) umzusetzen, wobei der Analog/Digital-Umsetzer, ADC, (141-4) konfiguriert ist, ein Signal (ADC-Aktivsignal) auszugeben, das eine Betriebsperiode des Analog/Digital-Umsetzers, ADC, (141-4) angibt.

3. Berührungsanzeigevorrichtung nach Anspruch 2, wobei jede der mehreren Erfassungseinheiten (141-2) enthält:
einen Vorverstärker (Pre-Amp), der konfiguriert ist, das Berührungsansteuerungssignal (TDS) an die mehreren Berührungselektroden (TE) auszugeben;
einen Integrator (INTG), der konfiguriert ist, das Berührungserfassungssignal (TSS) zu integrieren; und
eine Abtast- und Halteschaltung (SHA), die konfiguriert ist, den ganzzahligen Wert (INT TSS) des Berührungserfassungssignals (TSS) abzutasten und zu halten.

4. Berührungsanzeigevorrichtung nach einem der vorhergehenden Ansprüche, wobei die Abtaststeuerschaltung (145, 245, 345) konfiguriert ist, ein Abtaststeuersignal (OS, SCS) auszugeben, wenn sich eine Betriebsperiode des Analog/Digital-Umsetzers ADC (141-1) und die Anzeigeperiode überdecken, um dadurch den Abtastzeitpunkt des ganzzahligen Werts (INT-TSS) des Berührungserfassungssignals (TSS) anzupassen.

5. Berührungsanzeigevorrichtung nach einem der vorhergehenden Ansprüche 2-4, wobei der Analog/Digital-Umsetzer ADC (141-4) konfiguriert ist, eine zweite Stufe eines ADC-Aktivsignals (ADC_Aktiv) an die Abtaststeuerschaltung (145, 245, 345) nur, während der ganzzahlige Wert (INT-TSS) des Berührungserfassungssignals (TSS) in die digitalen Erfassungsdaten (SD) umgesetzt wird und das Synchronisationssignal (Tsync) eine erste Stufe in der Berührungserfassungsperiode ist und eine zweite Stufe in der Anzeigeperiode ist, auszugeben.

6. Berührungsanzeigevorrichtung nach einem der vorhergehenden Ansprüche, wobei die Abtaststeuerschaltung (145, 245, 345) enthält:
einen Komparator (145-1), der konfiguriert ist, ein Signal (ADC-Aktivsignal), das eine Betriebsperiode des Analog/Digital-Umsetzers ADC (141-4) angibt, und das Synchronisationssignal (Tsync) zu vergleichen, und konfiguriert ist, ein Überdeckungssignal (OS) auszugeben, wenn sich das Signal (ADC-Aktivsignal), das eine Betriebsperiode angibt, und das Synchronisationssignal (Tsync) überdecken; und
einen Abtaststeuersignalgenerator (145-2), der konfiguriert ist, das Abtaststeuersignal (MPWM, SCS) in Übereinstimmung mit dem Überdeckungssignal (OS) zu erzeugen.

7. Berührungsanzeigevorrichtung nach Anspruch 6, wobei dann, wenn sowohl das Signal (ADC Aktivsignal), das eine Betriebsperiode des Analog/Digital-Umsetzers ADC (141-4) angibt, als auch das Synchronisationssignal (Tsync) zweite Stufen sind, der Komparator (145-1) konfiguriert ist, eine zweite Stufe eines Überdeckungssignals (OS) zu erzeugen, und dann, wenn eines des Signals (ADC-Aktiv) und des Synchronisationssignals (OS) eine erste Stufe ist, der Komparator konfiguriert ist, eine erste Stufe eines Überdeckungssignals (OS) zu erzeugen, wobei der Abtaststeuersignalgenerator (145-2) vorzugsweise konfiguriert ist, das Abtaststeuersignal (MPWM, SCS) nur dann zu erzeugen, wenn das Überdeckungssignal (OS) eine zweite Stufe ist.

8. Berührungsanzeigevorrichtung nach Anspruch 6 oder 7, wobei die Abtaststeuerschaltung (145, 245, 345) ferner ein Register (645-3) enthält, das konfiguriert ist, ein Überdeckungssignal (OS) für jede Berührungserfassungsperiode, in der verschiedene Typen von Berührungen ausgeführt werden, zu speichern.

9. Berührungsanzeigevorrichtung nach einem der vorhergehenden Ansprüche, wobei die Berührungserfassungsschaltung (2141) ferner einen Datenkompensator (241-5) enthält, der konfiguriert ist, die digitalen Erfassungsdaten (SD), die von dem Analog/Digital-Umsetzer (241-4) ausgegeben werden, zu kompensieren, um digitale kompensierte Erfassungsdaten (CSD) zu erzeugen.

10. Berührungsanzeigevorrichtung nach Anspruch 9, wobei der Datenkompensator (241-5) konfiguriert ist, digitale Erfassungsdaten (SD), die von dem Analog/Digital-Umsetzer ADC (241-4) eingegeben werden, zu Erfassungsdaten (SD), die einem Berührungserfassungssignal (TSS) entsprechen, das nicht abgetastet ist, zu addieren, um die kompensierten Erfassungsdaten (CDS) zu erzeugen.

11. Ansteuerungsverfahren einer Berührungsanzeigevorrichtung (100), die eine Berührungstafel (113) enthält, die zeitlich in eine Berührungserfassungsperiode und eine Anzeigeperiode gegliedert in einem Rahmen anhand eines Synchronisationssignals (Tsync) angesteuert wird und mehrere Berührungselektroden (TE) und eine Berührungsansteuerung (140), die die Berührungstafel (113) ansteuert, enthält, wobei die mehreren Rahmen einen ersten Rahmen und einen zweiten Rahmen, der auf den ersten Rahmen folgt, enthalten, wobei das Ansteuerungsverfahren umfasst:
einen PWM-Erzeugungsschritt (S110) des Erzeugens eines PWM-Signals, Impulsbreitenmodulationssignals, das mehrere Impulse enthält;
einen Berührungsansteuerungssignalausgabeschritt (TDS-Ausgabeschritt) (S140) des Ausgebens des PWM-Signals als ein Berührungsansteuerungssignal (TDS) an jede der mehreren Berührungselektroden (TE);
einen Berührungserfassungssignaleingabeschritt (TSS-Eingabeschritt) (S150) zum Empfangen eines analogen Berührungserfassungssignals (TSS), das durch jede der mehreren Berührungselektroden (TE) detektiert wird;
einen Signalvergleichsschritt (S120) zum Bestimmen, ob sich ein Signal (ADC-Aktivsignal), das eine Betriebsperiode des Analog/Digital-Umsetzers, ADC, (141-4) angibt, und das Synchronisationssignal (Tsync) überdecken, um ein Überdeckungssignal (OS) in dem ersten Rahmen auszugeben;
einen Abtaststeuerschritt (S130) zum Vorsetzen eines Abtastzeitpunkts eines ganzzahligen Werts (INT-TSS) des Berührungserfassungssignals (TSS) und Halten des ganzzahligen Werts (INT-TSS) in dem zweiten Rahmen;
einen Analog/Digital-Umsetzungsschritt (S160) zum Empfangen des ganzzahligen Werts (INT-TSS) des analogen Berührungserfassungssignals (TSS), um den ganzzahligen Wert (INT-TSS) in digitale Erfassungsdaten (SD) umzusetzen; und
einen Erfassungsdatenübertragungsschritt (S170) zum Senden der digitalen Erfassungsdaten (SD), um Berührungsinformationen über das Vorhandensein einer Berührung und eine Berührungsposition anhand der digitalen Erfassungsdaten (SD) zu bestimmen.

12. Ansteuerungsverfahren nach Anspruch 11, wobei das Signal (ADC-Aktivsignal), das eine Betriebsperiode eines Analog/Digital-Umsetzers ADC (141-4) angibt, nur dann eine zweite Stufe ist, wenn ein Analog-Digital-Umsetzer ADC (141-4), der in der Berührungsansteuerung (140) enthalten ist, arbeitet und das Synchronisationssignal (Tsync) eine erste Stufe in der Berührungserfassungsperiode ist und eine zweite Stufe in der Anzeigeperiode ist.

13. Ansteuerungsverfahren nach Anspruch 11 oder 12, wobei in dem Signalvergleichsschritt (S120), wenn sowohl das ADC-Aktivsignal als auch das Synchronisationssignal (Tsync) zweite Stufen sind, eine zweite Stufe eines Überdeckungssignals (OS) erzeugt wird, und dann, wenn eines des ADC-Aktivsignals und des Synchronisationssignals (Tsync) eine erste Stufe ist, eine erste Stufe des Überdeckungssignals (OS) erzeugt wird.

14. Ansteuerungsverfahren nach Anspruch 13, wobei dann, wenn das Überdeckungssignal (OS) eine zweite Stufe ist, in dem Abtaststeuerschritt (S130) ein ganzzahliger Wert (INT-TSS) des Berührungserfassungssignals (TSS) abgetastet wird, bevor ein letzter Impuls der mehreren Impulse des PWM-Signals ausgegeben wird.

15. Ansteuerungsverfahren nach einem der Ansprüche 11-14, das ferner umfasst: einen Erfassungsdatenkompensationsschritt (S270) zum Addieren der digitalen Erfassungsdaten (SD), die in dem Analog/Digital-Umsetzungsschritt umgesetzt werden, zu Erfassungsdaten (SD), die einem Berührungserfassungssignal (TSS) entsprechen, das in dem Abtaststeuerschritt (S230) nicht abgetastet wird, um kompensierte Erfassungsdaten (CSD) zu erzeugen, wobei vorzugsweise in dem Erfassungsdatenübertragungsschritt (S280) die digitalen kompensierten Erfassungsdaten (CSD) gesendet werden, um Berührungsinformationen über das Vorhandensein einer Berührung und einer Berührungsposition anhand der kompensierten Erfassungsdaten zu bestimmen.

## Revendications

1. Dispositif d'affichage tactile, comportant :
un panneau tactile (113) configuré pour être piloté de manière répartie dans le temps dans une période de détection tactile et une période d'affichage dans une trame basée sur un signal de synchronisation (Tsync), le panneau tactile (111) incluant une pluralité d'électrodes tactiles (TE) ; et
une commande configurée pour délivrer en sortie le signal de synchronisation (Tsync),
un pilote tactile (140) configuré pour piloter le panneau tactile (113) et configuré pour recevoir le signal de synchronisation (Tsync), dans lequel le pilote tactile (140) inclut :
un circuit de détection tactile (141) configuré pour fournir un signal de commande tactile (TDS) à chaque électrode de la pluralité d'électrodes tactiles (TE), le circuit de détection tactile (141) étant en outre configuré pour recevoir un signal de détection tactile analogique (TSS) détecté par chaque électrode de la pluralité d'électrodes tactiles (TE) et pour échantillonner une valeur intégrale (INT-TSS) du signal de détection tactile analogique (TSS) pour délivrer en sortie des données de détection numériques (SD) ;
un circuit de commande tactile (143) configuré pour générer un signal de modulation de largeur d'impulsion, PWM, incluant une pluralité d'impulsions et configuré pour recevoir les données de détection numériques (SD) ; dans lequel le signal de commande tactile (TDS) délivré en sortie par le circuit de détection tactile (141) à chaque électrode de la pluralité d'électrodes tactiles (TE) est basé sur le signal PWM ; et
un circuit de commande d'échantillonnage (145, 245, 345) configuré pour délivrer en sortie un signal de commande d'échantillonnage (MPWM, SCS) au circuit de détection tactile (141) pour commander une synchronisation d'échantillonnage de la valeur intégrale (INT-TSS) du signal de détection tactile (TSS) sur la base du signal de synchronisation (Tsync).

2. Dispositif d'affichage tactile selon la revendication 1, dans lequel le circuit de détection tactile (141) inclut :
une pluralité d'unités de détection (141-2) configurées pour intégrer le signal de détection tactile (TSS) et échantillonner la valeur intégrale (INT-TSS) du signal de détection tactile (TSS) ; et
un convertisseur analogique-numérique, ADC, (141-4) configuré pour convertir la valeur intégrale (INT-TSS) du signal de détection tactile (TSS) en données de détection numériques (SD), le convertisseur analogique numérique, ADC, (141-4) étant configuré pour délivrer en sortie un signal (signal actif d'ADC) indiquant une période de fonctionnement du convertisseur analogique-numérique ADC (141-4).

3. Dispositif d'affichage tactile selon la revendication 2, dans lequel chaque unité de la pluralité d'unités de détection (141-2) inclut :
un préamplificateur (Pre-Amp) configuré pour délivrer en sortie le signal de commande tactile (TDS) à la pluralité d'électrodes tactiles (TE) ;
un intégrateur (INTG) configuré pour intégrer le signal de détection tactile (TSS) ; et
un circuit échantillonneur-bloqueur (SHA) configuré pour échantillonner et bloquer la valeur intégrale (INT-TSS) du signal de détection tactile (TSS).

4. Dispositif d'affichage tactile selon l'une quelconque des revendications précédentes, dans lequel le circuit de commande d'échantillonnage (145, 245, 345) est configuré pour délivrer en sortie un signal de commande d'échantillonnage (OS, SCS) lorsqu'une période de fonctionnement du convertisseur analogique-numérique ADC (141-1) et la période d'affichage se chevauchent pour ainsi adapter la synchronisation d'échantillonnage de la valeur intégrale (INT-TSS) du signal de détection tactile (TSS).

5. Dispositif d'affichage tactile selon l'une quelconque des revendications 2 à 4 précédentes, dans lequel le convertisseur analogique-numérique ADC (141-4) est configuré pour délivrer en sortie un second niveau d'un signal actif d'ADC (ADC_Active) au circuit de commande d'échantillonnage (145, 245, 345) uniquement lorsque la valeur intégrale (INT-TSS) du signal de détection tactile (TSS) est convertie en données de détection numériques (SD) et que le signal de synchronisation (Tsync) est un premier niveau pendant la période de détection tactile et est un second niveau pendant la période d'affichage.

6. Dispositif d'affichage tactile selon l'une quelconque des revendications précédentes, dans lequel le circuit de commande d'échantillonnage (145, 245, 345) inclut :
un comparateur (145-1) configuré pour comparer un signal (signal actif d'ADC) indiquant une période de fonctionnement du convertisseur analogique-numérique ADC (141-4) et le signal de synchronisation (Tsync) et configuré pour délivrer en sortie un signal de chevauchement (OS), si le signal (signal actif d'ADC) indiquant une période de fonctionnement et le signal de synchronisation (Tsync) se chevauchent ; et
un générateur de signal de commande d'échantillonnage (145-2) configuré pour générer le signal de commande d'échantillonnage (MPWM, SCS) en fonction du signal de chevauchement (OS).

7. Dispositif d'affichage tactile selon la revendication 6, dans lequel lorsque le signal (signal actif d'ADC) indiquant une période de fonctionnement du convertisseur analogique-numérique ADC (141-4) et le signal de synchronisation (Tsync) sont tous deux des seconds niveaux, le comparateur (145-1) est configuré pour générer un second niveau de signal de chevauchement (OS) et lorsqu'un signal quelconque parmi le signal (ADC_Active) et le signal de synchronisation (Tsync) est un premier niveau, le comparateur est configuré pour générer un premier niveau de signal de chevauchement (OS), le générateur de signal de commande d'échantillonnage (145-2) étant de préférence configuré pour générer le signal de commande d'échantillonnage (MPWM, SCS) uniquement lorsque le signal de chevauchement (OS) est un second niveau.

8. Dispositif d'affichage tactile selon la revendication 6 ou 7, dans lequel le circuit de commande d'échantillonnage (145, 245, 345) inclut en outre un registre (645-3) configuré pour stocker un signal de chevauchement (OS) pour chaque période de détection tactile dans laquelle différents types de touchers sont réalisés.

9. Dispositif d'affichage tactile selon l'une quelconque des revendications précédentes, dans lequel le circuit de détection tactile (214-1) inclut en outre un compensateur de données (241-5) configuré pour compenser les données de détection numériques (SD) délivrées à la sortie du convertisseur analogique-numérique (241-4) pour générer des données de détection numériques compensées (CSD).

10. Dispositif d'affichage tactile selon la revendication 9, dans lequel le compensateur de données (241-5) est configuré pour ajouter des données de détection numériques (SD) entrées à partir du convertisseur analogique-numérique ADC (241-4) à des données de détection (SD) correspondant à un signal de détection tactile (TSS) qui n'est pas échantillonné pour générer les données de détection compensées (CDS).

11. Procédé de pilotage d'un dispositif d'affichage tactile (100) qui inclut un panneau tactile (113) qui est piloté de manière répartie dans le temps dans une période de détection tactile et une période d'affichage dans chaque trame d'une pluralité de trames sur la base d'un signal de synchronisation (Tsync) et inclut une pluralité d'électrodes tactiles (TE) ; et un pilote tactile (140) qui pilote le panneau tactile (113), dans lequel la pluralité de trames inclut une première trame et une seconde trame suivant la première trame, le procédé de pilotage comportant :
une étape de génération de PWM (S110) consistant à générer un signal de modulation de largeur d'impulsion, PWM, incluant une pluralité d'impulsions ;
une étape de sortie de signal de commande tactile (TDS) (S140) consistant à délivrer en sortie le signal PWM sous la forme d'un signal de commande tactile (TDS) à chaque électrode de la pluralité d'électrodes tactiles (TE) ;
une étape d'entrée de signal de détection tactile (TSS) (S150) pour recevoir un signal de détection tactile analogique (TSS) détecté par chaque électrode de la pluralité d'électrodes tactiles (TE) ;
une étape de comparaison de signaux (S120) pour déterminer si un signal (signal actif d'ADC) indiquant une période de fonctionnement d'un convertisseur analogique-numérique ADC (141-4) et le signal de synchronisation (Tsync) se chevauchent pour délivrer en sortie un signal de chevauchement (OS) dans la première trame ;
une étape de commande d'échantillonnage (S130) pour faire avancer une synchronisation d'échantillonnage d'une valeur intégrale (INT-TSS) du signal de détection tactile (TSS) et bloquer la valeur intégrale (INT-TSS) dans la seconde trame ;
une étape de conversion analogique-numérique (S160) pour recevoir la valeur intégrale (INT-TSS) du signal de détection tactile analogique (TSS) pour convertir la valeur intégrale (INT-TSS) en données de détection numériques (SD) ; et
une étape de transmission de données de détection (S170) pour transmettre les données de détection numériques (SD) afin de déterminer des informations tactiles concernant la présence d'un toucher et une position de toucher sur la base des données de détection numériques (SD).

12. Procédé de pilotage selon la revendication 11, dans lequel le signal (signal actif d'ADC) indiquant une période de fonctionnement d'un convertisseur analogique-numérique ADC (141-4) est un second niveau uniquement lorsqu'un convertisseur analogique-numérique ADC (141-4) inclus dans le pilote tactile (140) fonctionne et le signal de synchronisation (Tsync) est un premier niveau pendant la période de détection tactile et est un second niveau pendant la période d'affichage.

13. Procédé de pilotage selon la revendication 11 ou 12, dans lequel à l'étape de comparaison de signaux (S120), lorsque le signal actif d'ADC et le signal de synchronisation (Tsync) sont tous deux des seconds niveaux, un second niveau d'un signal de chevauchement (OS) est généré et lorsqu'un signal quelconque parmi le signal actif d'ADC et le signal de synchronisation (Tsync) est un premier niveau, un premier niveau du signal de chevauchement (OS) est généré.

14. Procédé de pilotage selon la revendication 13, dans lequel lorsque le signal de chevauchement (OS) est un second niveau, à l'étape de commande d'échantillonnage (S130), une valeur intégrale (INT-TSS) du signal de détection tactile (TSS) est échantillonnée avant de délivrer en sortie une dernière impulsion de la pluralité d'impulsions du signal PWM.

15. Procédé de pilotage selon l'une quelconque des revendications 11 à 14, comportant en outre : une étape de compensation de données de détection (S270) consistant à ajouter les données de détection numériques (SD) converties à l'étape de conversion analogique-numérique, à des données de détection (DS) correspondant à un signal de détection tactile (TSS) qui n'est pas échantillonné à l'étape de commande d'échantillonnage (S230) pour générer des données de détection compensées (CSD), à l'étape de transmission de données de détection (S280), les données de détection numériques compensées (CSD) étant de préférence transmises pour déterminer des informations tactiles concernant la présence d'un toucher et une position de toucher sur la base des données de détection compensées.
